# EUROPEAN PATENT APPLICATION

(11) **EP 4 239 874 A1**
(43) Date of publication of application: **06.09.2023**
(21) Application number: 23700046.8
(22) Date of filing: 19.01.2023
(51) Int. Cl.: H02N 2/04, H02N 2/00, G02B 7/04, G03B 5/02, G03B 3/00, G03B 13/36

(54) **PIEZOELECTRIC LINEAR MOTOR AND CAMERA MODULE COMPRISING SAME**

(30) Priority: 21.01.2022 KR 20220017936; 11.02.2022 KR 20220017936
(71) Applicant: Samsung Electronics Co., Ltd., Gyeonggi-do 16677 (KR)
(72) Inventor: OH, Jinheon, Gyeonggi-do 16677 (KR)
(74) Representative: HGF
(86) International application number: PCT/KR2023/000913
(87) International publication number: WO 2023/140634

(57) **Abstract**

A piezoelectric motor according to an embodiment includes a vibrator including an elastic body and a piezoelectric element attached to the elastic body; and a rod coupled to the vibrator and configured to move based on vibration of the vibrator. The piezoelectric element includes a first surface and a second surface opposite to the first surface of the piezoelectric element and attached to the elastic body. The rod extends perpendicular to the piezoelectric element. The vibrator is configured to generate bending vibration in a lengthwise direction of the rod based on a voltage applied to the piezoelectric element and is configured such that a nodal position is defined during the bending vibration. The elastic body includes a base portion to which the second surface of the piezoelectric element is attached, and a protruding portion protruding from the base portion, and formed at a position corresponding to the nodal position of the vibrator.

## Description

### [Technical Field]

The disclosure relates to a piezoelectric linear motor and a camera module including the same.

### [Background Art]

A mobile electronic device, such as a smartphone, may include a camera module. The camera module may include lenses, a lens barrel surrounding the lenses, and an image sensor. The camera module may support various functions. For example, the camera module may support functions related to image stabilization (e.g., optical image stabilization (OIS), digital image stabilization (DIS), or electrical image stabilization (EIS)) and auto focus (AF).

The camera module may be configured to provide an optical image stabilization function and an auto focus function by moving the lenses relative to the image sensor. For example, the camera module may be configured to move the lenses relative to the image sensor in directions perpendicular to an optical axis in relation to the optical image stabilization function, or may be configured to move the lenses relative to the image sensor in the direction of the optical axis in relation to the auto focus function.

The camera module may include various types of actuators for implementing a movement of the lenses. For example, the actuators may be provided by using a stepping motor (STM), a voice coil motor (VCM), shape memory alloys (SMA), and a piezoelectric motor.

### [Disclosure]

### [Technical Problem]

The camera module may be configured to move the lenses using a voice coil motor that includes a coil and a magnet. An actuator of a voice coil motor type may increase the weight of the camera module due to the weights of a magnet and a coil, and magnetic interference may occur.

Alternatively, the camera module may be configured to move the lenses using a stepping motor. An actuator of a stepping motor type may have a limitation in compactness of the camera module due to a large size thereof, and noise may be generated by an operation of a motor.

Various embodiments of the disclosure provide a piezoelectric linear motor for linearly moving a lens using bending vibration and a camera module including the same.

The technical problems to be solved by the disclosure are not limited to the aforementioned problems, and any other technical problems not mentioned herein will be clearly understood from the following description by those skilled in the art to which the disclosure pertains.

### [Technical Solution]

A piezoelectric motor according to an embodiment of the disclosure includes a vibrator including an elastic body and a piezoelectric element attached to the elastic body; and a rod coupled to the vibrator and configured to move based on vibration of the vibrator. The piezoelectric element includes a first surface and a second surface opposite to the first surface of the piezoelectric element and attached to the elastic body. The rod extends substantially perpendicular to the piezoelectric element. The vibrator is configured to generate bending vibration in a lengthwise direction of the rod based on a voltage applied to the piezoelectric element and is configured such that at least one nodal position is defined during the bending vibration. The elastic body includes a base portion to which the second surface of the piezoelectric element is attached, and at least one protruding portion protruding from the base portion, and formed at a position corresponding to the at least one nodal position of the vibrator.

A camera module according to an embodiment of the disclosure includes a camera housing, a first carrier disposed in the camera housing, a lens assembly that is coupled to the first carrier and that includes at least one lens, and a piezoelectric motor that provides a driving force to move the first carrier in a direction of an optical axis of the lens, at least a portion of the piezoelectric motor being connected to the first carrier. The piezoelectric motor includes a vibrator including an elastic body and a piezoelectric element attached to the elastic body; and a rod coupled to the vibrator and configured to move based on vibration of the vibrator. The piezoelectric element includes a first surface and a second surface opposite to the first surface of the piezoelectric element and attached to the elastic body. The rod extends substantially perpendicular to the piezoelectric element. The vibrator is configured to generate bending vibration in a lengthwise direction of the rod based on a voltage applied to the piezoelectric element and is configured such that at least one nodal position is defined during the bending vibration. The elastic body includes a base portion to which the second surface of the piezoelectric element is attached, and at least one protruding portion protruding from the base portion, and formed at a position corresponding to the at least one nodal position of the vibrator.

### [Advantageous Effects]

The piezoelectric motor according to various embodiments of the disclosure may include the uni-morph type vibrator having the displacement expansion mechanism and thus may replace a bi-morph type vibrator.

The piezoelectric motor according to various embodiments of the disclosure may be constrained to another mechanism through the protruding portion formed at the position corresponding to the nodal point or the nodal line of the vibrator and thus may minimize vibration transmitted to the other mechanism.

In the piezoelectric motor according to various embodiments of the disclosure, the displacement expansion mechanism for expansion of vibration displacement and the vibration reduction mechanism for reduction of vibration transmitted to another mechanism may be integrally formed with the elastic body. Accordingly, the number of parts and process steps may be reduced, and thus manufacturing costs may be reduced.

In addition, the disclosure may provide various effects that are directly or indirectly recognized.

### [Description of Drawings]

FIG. 1 is a block diagram of an electronic device in a network environment according to an embodiment.
FIG. 2 is a block diagram illustrating a camera module according to an embodiment.
FIG. 3A is a front perspective view of an electronic device according to an embodiment.
FIG. 3B is a rear perspective view of the electronic device according to an embodiment.
FIG. 3C is an exploded perspective view of the electronic device according to an embodiment.
FIG. 4A is a front view of a camera module according to an embodiment.
FIG. 4B is a plan view of the camera module according to an embodiment.
FIG. 5 illustrates a lens assembly, a lens carrier, and a piezoelectric motor of the camera module according to an embodiment.
FIG. 6A is a perspective view of the piezoelectric motor and a connecting member of the camera module according to an embodiment.
FIG. 6B is an exploded perspective view of the piezoelectric motor and the connecting member of the camera module according to an embodiment.
FIG. 7 illustrates driving of the piezoelectric motor according to an embodiment.
FIG. 8A illustrates an operation of moving a first carrier using the piezoelectric motor according to an embodiment.
FIG. 8B illustrates the operation of moving the first carrier using the piezoelectric motor according to an embodiment.
FIG. 9 illustrates an elastic body and a piezoelectric element of the piezoelectric motor according to an embodiment.
FIG. 10 illustrates a second carrier and the piezoelectric motor of the camera module according to an embodiment.
FIG. 11 illustrates a piezoelectric motor according to various embodiments.
FIG. 12A is a graph depicting driving performance of the piezoelectric motor according to the first embodiment of FIG. 6A.
FIG. 12B is a graph depicting driving performance of the piezoelectric motor according to the second embodiment of FIG. 11.
FIG. 12C is a graph depicting driving performance of a piezoelectric motor according to a comparative example of FIG. 11.
FIG. 13 illustrates various support structures of a piezoelectric motor according to an embodiment.
FIG. 14A is a graph depicting driving performance of the piezoelectric motor depending on a first support structure of FIG. 13.
FIG. 14B is a graph depicting driving performance of the piezoelectric motor depending on a second support structure of FIG. 13.

With regard to description of the drawings, identical or similar reference numerals may be used to refer to identical or similar components.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

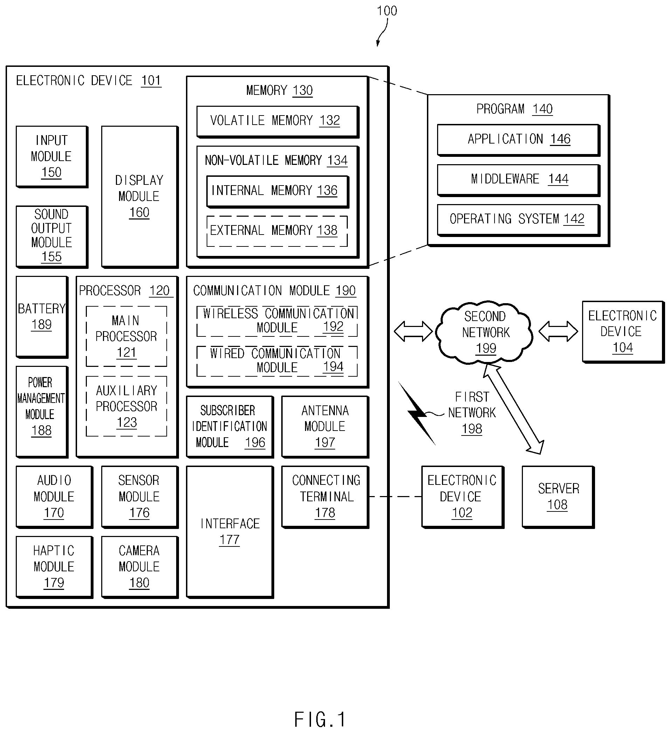

FIG. 1 is a block diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

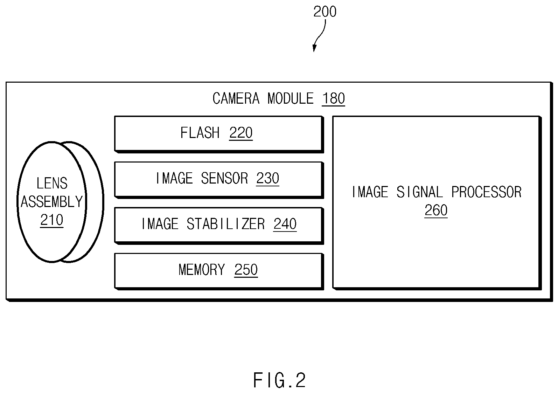

Fig. 2 is a block diagram illustrating the camera module according to various embodiments.

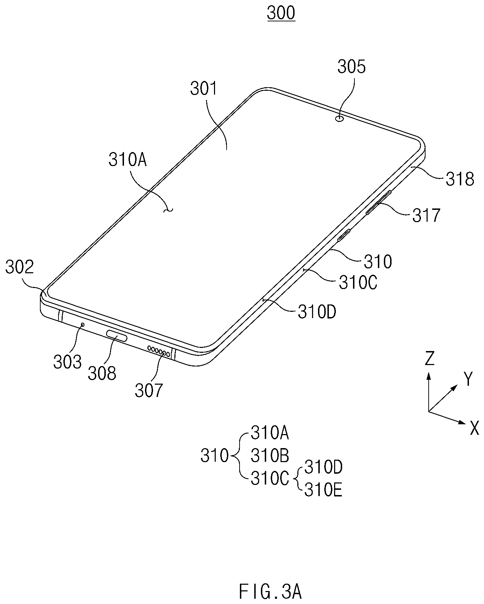

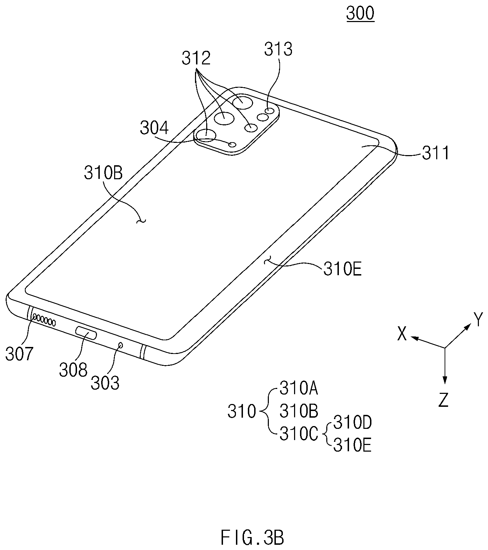

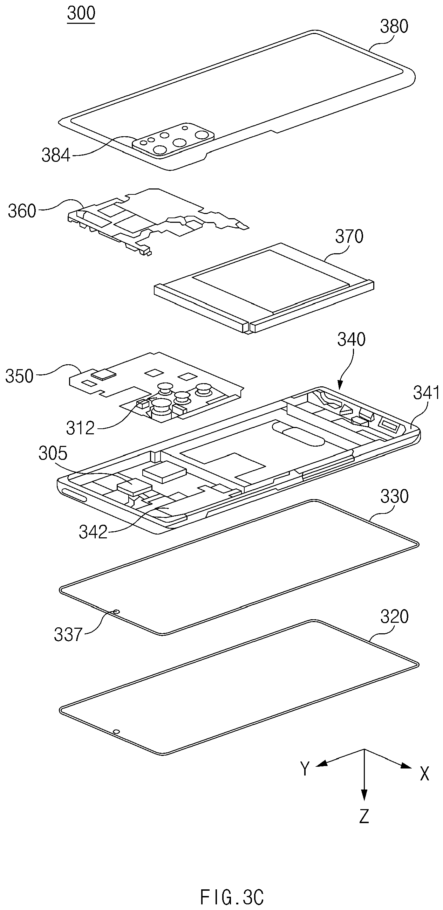

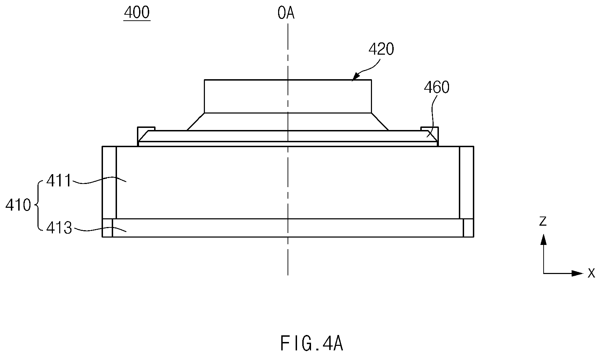

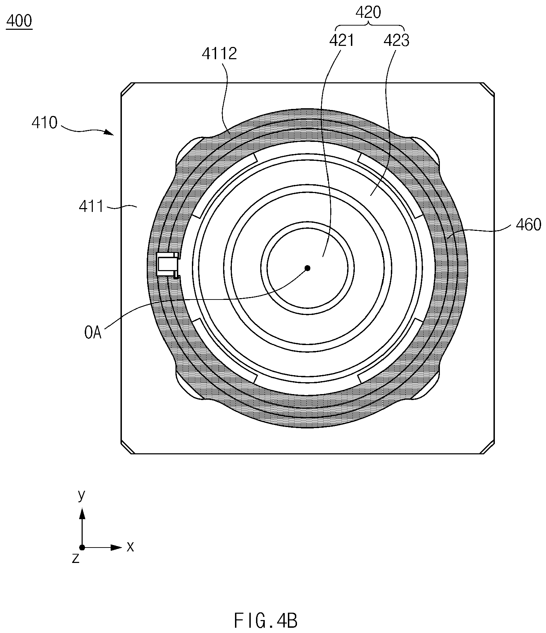

Referring to Fig. 2, the camera module 180 (e.g., the camera module 305, 312 of FIGS. 3A, 3B and 3C, or the camera module 400 of FIG. 4) may include a lens assembly 210 (e.g., the lens assembly 410 of FIG. 4), a flash 220, an image sensor 230, an image stabilizer 240, memory 250 (e.g., buffer memory), or an image signal processor 260.

The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp.

The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180.

According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

FIG. 3A is a front perspective view of an electronic device according to an embodiment. FIG. 3B is a rear perspective view of the electronic device according to an embodiment. FIG. 3C is an exploded perspective view of the electronic device according to an embodiment.

Referring to FIGS. 3A and 3B, the electronic device 300 according to an embodiment (e.g., the electronic device 101 of FIG. 1) may include a housing 310 that includes a first surface (or, a front surface) 310A, a second surface (or, a rear surface) 310B, and a third surface (or, a side surface) 310C surrounding a space between the first surface 310A and the second surface 310B.

In another embodiment, the housing 310 may refer to a structure that forms some of the first surface 310A, the second surface 310B, and the third surface 310C.

In an embodiment, the first surface 310A may be formed by a front plate 302, at least a portion of which is substantially transparent (e.g., a glass plate including various coating layers, or a polymer plate). The second surface 310B may be formed by a back plate 311 that is substantially opaque. The back plate 311 may be formed of, for example, coated or colored glass, ceramic, a polymer, metal (e.g., aluminum, stainless steel (STS), or magnesium), or a combination of at least two of the aforementioned materials. The third surface 310C may be formed by a side bezel structure (or, a side member) 318 that is coupled with the front plate 302 and the back plate 311 and that includes metal and/or a polymer.

In another embodiment, the back plate 311 and the side bezel structure 318 may be integrally formed with each other and may include the same material (e.g., a metallic material such as aluminum).

In the illustrated embodiment, the front plate 302 may include two first regions 310D that curvedly and seamlessly extend from partial regions of the first surface 310A toward the back plate 311. The first regions 310D may be located at opposite long edges of the front plate 302.

In the illustrated embodiment, the back plate 311 may include two second regions 310E that curvedly and seamlessly extend from partial regions of the second surface 310B toward the front plate 302. The second regions 310E may be located at opposite long edges of the back plate 311.

In another embodiment, the front plate 302 (or, the back plate 311) may include only one of the first regions 310D (or, the second regions 310E). Furthermore, in another embodiment, the front plate 302 (or, the back plate 311) may not include a part of the first regions 310D (or, the second regions 310E).

In an embodiment, when viewed from a side of the electronic device 300, the side bezel structure 318 may have a first thickness (or, width) at sides (e.g., short sides) not including the first regions 310D or the second regions 310E and may have a second thickness at sides (e.g., long sides) including the first regions 310D or the second regions 310E, the second thickness being smaller than the first thickness.

In an embodiment, the electronic device 300 may include at least one of a display 301 (e.g., the display module 160 of FIG. 1), audio modules 303, 304, and 307 (e.g., the audio module 170 of FIG. 1), a sensor module (not illustrated) (e.g., the sensor module 176 of FIG. 1), camera modules 305, 312, and 313 (e.g., the camera module 180 of FIG. 1), key input devices 317 (e.g., the input device 150 of FIG. 1), a light emitting element (not illustrated), or a connector hole 308 (e.g., the connecting terminal 178 of FIG. 1). In another embodiment, at least one component (e.g., the key input devices 317 or the light emitting element (not illustrated)) among the aforementioned components may be omitted from the electronic device 300, or other component(s) may be additionally included in the electronic device 300.

In an embodiment, the display 301 may be visually exposed through most of the front plate 302. For example, at least a portion of the display 301 may be visually exposed through the front plate 302 that includes the first surface 310A and the first regions 310D of the third surface 310C. The display 301 may be disposed on a rear surface of the front plate 302.

In an embodiment, the periphery of the display 301 may be formed to be substantially the same as the shape of the adjacent outside edge of the front plate 302. In another embodiment, to expand the area by which the display 301 is visually exposed, the gap between the outside edge of the display 301 and the outside edge of the front plate 302 may be substantially constant.

In an embodiment, a surface of the housing 310 (or, the front plate 302) may include a screen display region that is formed as the display 301 is visually exposed. For example, the screen display region may include the first surface 310A and the first regions 310D of the side surface.

In another embodiment, the screen display region 310A and 310D may include a sensing region (not illustrated) that is configured to obtain biometric information of a user. When the screen display region 310A and 310D includes the sensing region, this may mean that at least a portion of the sensing region overlaps the screen display region 310A and 310D. For example, the sensing region (not illustrated) may refer to a region capable of displaying visual information by the display 301 like the other regions of the screen display region 310A and 310D and additionally obtaining biometric information (e.g., a fingerprint) of the user.

In an embodiment, the screen display region 310A and 310D of the display 301 may include a region through which the first camera module 305 (e.g., a punch hole camera) is visually exposed. For example, at least a portion of the periphery of the region through which the first camera module 305 is visually exposed may be surrounded by the screen display region 310A and 310D. In various embodiments, the first camera module 305 may include a plurality of camera modules (e.g., the camera module 180 of FIG. 1).

In various embodiments, the display 301 may be configured such that at least one of an audio module (not illustrated), a sensor module (not illustrated), a camera module (e.g., the first camera module 305), or a light emitting element (not illustrated) is disposed on a rear surface of the screen display region 310A and 310D. For example, the electronic device 300 may be configured such that the first camera module 305 (e.g., an under display camera (UDC)) is disposed on the rear side (e.g., the side facing the -z-axis direction) of the first surface 310A (e.g., the front surface) and/or the side surface 310C (e.g., at least one surface of the first areas 310D) so as to face toward the first surface 310A and/or the side surface 310C. For example, the first camera module 305 may be disposed under the display 301 and may not be visually exposed through the screen display region 310A and 310D.

In various embodiments, when the first camera module 305 is implemented with an under display camera, the region of the display 301 that faces the first camera module 305 may be formed to be a transmissive region that has a specified transmittance as a portion of the display region that displays contents. For example, the transmissive region may have a transmittance of about 5% to about 50%. The transmissive region may include a region through which light for generating an image by being focused on an image sensor (e.g., the image sensor 230 of FIG. 2) passes and that overlaps an effective region (e.g., a field of view (FOV) region) of the first camera module 305. For example, the transmissive region of the display 301 may include a region having a lower pixel density and/or wiring density than a surrounding region.

In another embodiment (not illustrated), the display 301 may be coupled with, or disposed adjacent to, touch detection circuitry, a pressure sensor capable of measuring the intensity (pressure) of a touch, and/or a digitizer that detects a stylus pen of a magnetic field type.

In an embodiment, the audio modules 303, 304, and 307 may include the microphone holes 303 and 304 and the speaker hole 307.

In an embodiment, the microphone holes 303 and 304 may include the first microphone hole 303 formed in a partial region of the third surface 310C and the second microphone hole 304 formed in a partial region of the second surface 310B. A microphone (not illustrated) for obtaining external sound may be disposed in the microphone holes 303 and 304. The microphone may include a plurality of microphones to sense the direction of sound.

In an embodiment, the second microphone hole 304 formed in the partial region of the second surface 310B may be disposed adjacent to the camera modules 305, 312, and 313. For example, the second microphone hole 304 may obtain sounds when the camera modules 305, 312, and 313 are executed, or may obtain sounds when other functions are executed.

In an embodiment, the speaker hole 307 may include an external speaker hole 307 and a receiver hole for telephone call (not illustrated). The external speaker hole 307 may be formed in a portion of the third surface 310C of the electronic device 300. In another embodiment, the external speaker hole 307, together with the microphone hole 303, may be implemented as a single hole. Although not illustrated, the receiver hole for telephone call (not illustrated) may be formed in another portion of the third surface 310C. For example, the receiver hole for telephone call may be formed in another portion (e.g., a portion facing the +y-axis direction) of the third surface 310C that faces the portion (e.g., a portion facing the -y-axis direction) of the third surface 310C in which the external speaker hole 307 is formed. According to various embodiments, the receiver hole for telephone call may not be formed in a portion of the third surface 310C and may be formed by a separation space between the front plate 302 (or, the display 301) and the side bezel structure 318.

In an embodiment, the electronic device 300 may include at least one speaker (not illustrated) that is configured to output sound outside the housing 310 through the external speaker hole 307 or the receiver hole for telephone call (not illustrated). According to various embodiments, the speaker may include a piezoelectric speaker from which the speaker hole 307 is omitted.

In an embodiment, the sensor module (not illustrated) may generate an electrical signal or a data value that corresponds to an operational state inside the electronic device 300 or an environmental state external to the electronic device 300. For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor.

In an embodiment, the camera modules 305, 312, and 313 may include the first camera module 305 (e.g., a punch hole camera) exposed on the first surface 310A of the electronic device 300, the second camera module 312 exposed on the second surface 310B, and/or the flash 313.

In an embodiment, the first camera module 305 may be visually exposed through a portion of the screen display region 310A and 310D of the display 301. For example, the first camera module 305 may be visually exposed on a partial region of the screen display region 310A and 310D through an opening (not illustrated) that is formed in a portion of the display 301. In another example, the first camera module 305 (e.g., an under display camera) may be disposed on a rear surface of the display 301 and may not be visually exposed through the screen display region 310A and 310D.

In an embodiment, the second camera module 312 may include a plurality of cameras (e.g., a dual camera, a triple camera, or a quad camera). However, the second camera module 312 is not necessarily limited to including the plurality of cameras and may include one camera.

In an embodiment, the first camera module 305 and the second camera module 312 may include one or more lenses, an image sensor, and/or an image signal processor. The flash 313 may include, for example, a light emitting diode or a xenon lamp. In another embodiment, two or more lenses (an IR camera lens, a wide angle lens, and a telephoto lens) and image sensors may be disposed on one surface of the electronic device 300.

In an embodiment, the key input devices 317 may be disposed on the third surface 310C of the housing 310 (e.g., the first regions 310D and/or the second regions 310E). In another embodiment, the electronic device 300 may not include all or some of the key input devices 317, and the key input devices 317 not included may be implemented in a different form, such as a soft key, on the display 301. In another embodiment, the key input devices may include a sensor module (not illustrated) that forms the sensing region (not illustrated) that is included in the screen display region 310A and 310D.

In an embodiment, the connector hole 308 may accommodate a connector. The connector hole 308 may be disposed in the third surface 310C of the housing 310. For example, the connector hole 308 may be disposed in the third surface 310C so as to be adjacent to at least a part of the audio modules (e.g., the microphone hole 303 and the speaker hole 307). In another embodiment, the electronic device 300 may include the first connector hole 308 capable of accommodating a connector (e.g., a USB connector) for transmitting/receiving power and/or data with an external electronic device, and/or a second connector hole (not illustrated) capable of accommodating a connector (e.g., an earphone jack) for transmitting/receiving audio signals with an external electronic device.

In an embodiment, the electronic device 300 may include a light emitting element (not illustrated). For example, the light emitting element (not illustrated) may be disposed on the first surface 310A of the housing 310. The light emitting element (not illustrated) may provide state information of the electronic device 300 in the form of light. In another embodiment, the light emitting element (not illustrated) may provide a light source that operates in conjunction with operation of the first camera module 305. For example, the light emitting element (not illustrated) may include an LED, an IR LED, and/or a xenon lamp.

Referring to FIG. 3C, the electronic device 300 according to an embodiment may include a front plate 320 (e.g., the front plate 302 of FIG. 3A), a display 330 (e.g., the display 301 of FIG. 3A), a side member 340 (e.g., the side bezel structure 318 of FIG. 3A), a printed circuit board 350, a rear case 360, a battery 370, a back plate 380 (e.g., the back plate 311 of FIG. 3B), and an antenna (not illustrated).

In various embodiments, the electronic device 300 may not include at least one component (e.g., the rear case 360) among the aforementioned components, or may additionally include other component(s). Some of the components of the electronic device 300 illustrated in FIG. 3C may be identical or similar to some of the components of the electronic device 300 illustrated in FIGS. 3A and 3B, and repetitive descriptions will hereinafter be omitted.

In an embodiment, the front plate 320 and the display 330 may be coupled to the side member 340. For example, based on FIG. 3C, the front plate 320 and the display 330 may be disposed under the side member 340. The front plate 320 and the display 330 may be located in the +z-axis direction from the side member 340. For example, the display 330 may be coupled to the bottom of the side member 340, and the front plate 320 may be coupled to the bottom of the display 330. The front plate 320 may form a portion of an outer surface (or, the exterior) of the electronic device 300. The display 330 may be disposed between the front plate 320 and the side member 340 so as to be located inside the electronic device 300.

In an embodiment, the side member 340 may be disposed between the display 330 and the back plate 380. For example, the side member 340 may be configured to surround a space between the back plate 380 and the display 330.

In an embodiment, the side member 340 may include a frame structure 341 that forms a portion of a side surface of the electronic device 300 (e.g., the third surface 310C of FIG. 3A) and a plate structure 342 extending inward from the frame structure 341.

In an embodiment, the plate structure 342 may be disposed inside the frame structure 341 so as to be surrounded by the frame structure 341. The plate structure 342 may be connected with the frame structure 341, or may be integrally formed with the frame structure 341. The plate structure 342 may be formed of a metallic material and/or a nonmetallic (e.g., polymer) material. In an embodiment, the plate structure 342 may support other components included in the electronic device 300. For example, at least one of the display 330, the printed circuit board 350, the rear case 360, or the battery 370 may be disposed on the plate structure 342. For example, the display 330 may be coupled to one surface (e.g., a surface facing the +z-axis direction) of the plate structure 342, and the printed circuit board 350 may be coupled to an opposite surface (e.g., a surface facing the -z-axis direction) that faces away from the one surface.

In an embodiment, the rear case 360 may be disposed between the back plate 380 and the plate structure 342. The rear case 360 may be coupled to the side member 340 so as to overlap at least a portion of the printed circuit board 350. For example, the rear case 360 may face the plate structure 342 with the printed circuit board 350 therebetween.

In an embodiment, a processor (e.g., the processor 120 of FIG. 1), a memory (e.g., the memory 130 of FIG. 1), and/or an interface (e.g., the interface 177 of FIG. 1) may be mounted on the printed circuit board 350. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 300 with an external electronic device and may include a USB connector, an SD card/MMC connector, or an audio connector.

In an embodiment, the battery 370 (e.g., the battery 189 of FIG. 1) may supply power to at least one component of the electronic device 300. For example, the battery 370 may include a primary cell that is not rechargeable, a secondary cell that is rechargeable, or a fuel cell. At least a portion of the battery 370 may be disposed on substantially the same plane as the printed circuit board 350. The battery 370 may be integrally disposed inside the electronic device 300, or may be disposed to be detachable from the electronic device 300.

In an embodiment, the antenna (not illustrated) (e.g., the antenna module 197 of FIG. 1) may be disposed between the back plate 380 and the battery 370. The antenna (not illustrated) may include, for example, a near field communication (NFC) antenna, a wireless charging antenna, and/or a magnetic secure transmission (MST) antenna. For example, the antenna (not illustrated) may perform short-range communication with an external device, or may wirelessly transmit and receive power required for charging.

In an embodiment, the first camera module 305 may be disposed on at least a portion (e.g., the plate structure 342) of the side member 340 such that a lens receives external light through a partial region of the front plate 320 (e.g., the front surface 310A of FIG. 3A). For example, the lens of the first camera module 305 may be visually exposed through a partial region of the front plate 320. A camera region 337 (e.g., an opening region or a light transmitting region) corresponding to the first camera module 305 may be formed in the display 330.

In an embodiment, the second camera module 312 may be disposed on the printed circuit board 350 such that a lens receives external light through a camera region 384 of the back plate 380 (e.g., the rear surface 310B of FIG. 3B) of the electronic device 300. For example, the lens of the second camera module 312 may be visually exposed through the camera region 384. In an embodiment, the second camera module 312 may be disposed in at least a portion of an inner space formed in the housing of the electronic device 300 (e.g., the housing 310 of FIGS. 3A and 3B) and may be electrically connected to the printed circuit board 350 through a connecting member (e.g., a connector).

In an embodiment, the camera region 384 may be formed on a surface of the back plate 380 (e.g., the rear surface 310B of FIG. 3B). In an embodiment, the camera region 384 may be formed to be at least partially transparent such that external light is incident on the lens of the second camera module 312. In an embodiment, at least a portion of the camera region 384 may protrude to a predetermined height from the surface of the back plate 380. However, without being necessarily limited thereto, the camera region 384 may form substantially the same plane as the surface of the back plate 380.

FIG. 4A is a front view of a camera module according to an embodiment. FIG. 4B is a plan view of the camera module according to an embodiment.

Referring to FIGS. 4A and 4B, the camera module 400 according to an embodiment (e.g., the first camera module 305 of FIGS. 3A and 3C and the second camera module 312 of FIGS. 3B and 3C) may include a camera housing 410, a lens assembly 420 (e.g., the lens assembly 210 of FIG. 2), and a lens carrier 460.

The camera housing 410 may include a cover 411 and a base 413. The cover 411 and the base 413 may be coupled with each other to form a predetermined space in which other parts of the camera module 400 are accommodated. The base 413 may support the lens assembly 420 and the lens carrier 460, and the cover 411 may be coupled to the base 413 to cover at least a portion the lens assembly 420 and at least a portion of the lens carrier 460. The cover 411 may have an opening 4112 formed therein in which at least a portion the lens assembly 420 and at least a portion of the lens carrier 460 are accommodated. For example, the lens assembly 420 and the lens carrier 460 may pass through the opening 4112, and at least a portion the lens assembly 420 and at least a portion of the lens carrier 460 may be exposed outside the camera housing 410. The cover 411 may perform a function of shielding electro-magnetic interference (EMI). For example, the cover 411 may be formed of a metallic material and may be referred to as a shield can (or, an EMI shield can).

Although not illustrated, the camera module 400 may further include an image sensor (not illustrated) (e.g., the image sensor 230 of FIG. 2). The image sensor may be fixed to the camera housing 410 so as to be aligned with the lens assembly 420 in the direction of an optical axis OA. For example, the image sensor may be fixedly disposed on the base 413. According to various embodiments, the image sensor may be disposed on one surface (e.g., a surface facing the +z/-z-axis direction) of the base 413 to overlap a lens 421 in the direction of the optical axis OA. The image sensor may receive light passing through the lens 421 and may be configured to generate an electrical signal based on the received light signal.

The lens assembly 420 may include the lens 421 and a lens barrel 423 in which the lens 421 is accommodated. For example, the lens barrel 423 may surround at least one lens 421. The lens barrel 423 may provide a function of supporting the lens 421 and protecting the lens 421 from an external impact. At least a portion of the lens assembly 420 may be visually exposed outside the camera housing 410 through the opening 4112 of the cover 411, and thus external light may be incident on the lens 421.

The lens assembly 420 may pass through the opening 4112 and may protrude to a predetermined height from the cover 411. However, the disclosure is not limited to the illustrated embodiment, and according to various embodiments, the lens assembly 420 may be completely accommodated in the camera housing 410 and may be configured such that external light is incident through a light receiving region including the opening 4112 or transparent glass.

The lens assembly 420 may be accommodated in the camera housing 410 in a state of being coupled to the lens carrier 460. For example, the lens assembly 420 may be coupled to (or, mounted on) at least a portion of the lens carrier 460 and may be configured to move together with the lens carrier 460 relative to the camera housing 410 in at least one direction (e.g., at least one direction among the x-axis direction, the y-axis direction, and the z-axis direction).

The lens carrier 460 may be coupled with the lens assembly 420 and may be disposed in the camera housing 410 so as to be movable. The lens carrier 460 may be configured to move relative to the camera housing 410 in the direction of the optical axis OA or a direction substantially perpendicular to the optical axis OA. The lens carrier 460 may move the lens assembly 420 relative to the camera housing 410 (or, the image sensor (not illustrated) fixed to the camera housing 410). For example, all and/or part of the lens carrier 460 may move relative to the camera housing 410 in the direction of the optical axis OA (e.g., the z-axis direction) or a direction substantially perpendicular to the optical axis OA (e.g., the x-axis direction and/or the y-axis direction) in a state in which at least a portion of the lens carrier 460 is accommodated in the camera housing 410, and the lens assembly 420 may move together with the lens carrier 460.

In the illustrated embodiment, a portion of the lens carrier 460 may protrude outside the cover 411. However, this is illustrative, and according to various embodiments, the lens carrier 460 may be completely accommodated in the camera housing 410.

The camera module 400 according to an embodiment of the disclosure may provide an auto focus (AF) function and an optical image stabilization (OIS) function by controlling a movement of the lens carrier 460. For example, the camera module 400 may perform the auto focus function by moving the lens carrier 460 in the direction of the optical axis OA. The camera module 400 may perform the optical image stabilization function (e.g., a camera-shake correction function) by moving the lens carrier 460 in one or more directions substantially perpendicular to the optical axis OA.

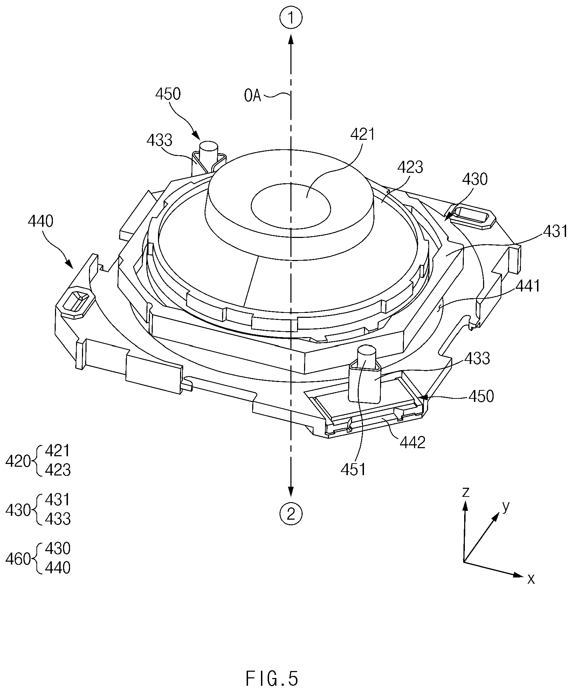

FIG. 5 illustrates the lens assembly, the lens carrier, and a piezoelectric motor of the camera module according to an embodiment.

Referring to FIG. 5, the camera module 400 according to an embodiment may include the lens assembly 420, the lens carrier 460, and the piezoelectric motor 450. The lens assembly 420 may include the lens 421 and the lens barrel 423. For example, the lens assembly 420, the lens carrier 460, and the piezoelectric motor 450 may be disposed in the inner space of the camera housing (e.g., the camera housing 410 of FIGS. 4A and 4B).

At least some of the components of the camera module 400 illustrated in FIG. 5 may be identical or similar to the components of the camera module 400 illustrated in FIGS. 4A and 4B, and repetitive descriptions will hereinafter be omitted.

The lens assembly 420 may move together with the lens carrier 460 and may be coupled to a first carrier 430. For example, the lens barrel 423 may be fit into the first carrier 430. The lens assembly 420 may move relative to the camera housing 410 and the image sensor (not illustrated) in response to a movement of the first carrier 430 and/or a second carrier 440. For example, the distance between the lens 421 and the image sensor in the direction of the optical axis OA may be changed as the lens assembly 420 moves in the direction of the optical axis OA (e.g., the z-axis direction) (e.g., the AF function). For example, as the lens assembly 420 moves in a direction (e.g., the x-axis direction and/or the y-axis direction) substantially perpendicular to the optical axis OA, the optical axis OA may be located so as not to be aligned with the center of the image sensor (e.g., the OIS function).

The lens carrier 460 may include the first carrier 430 and the second carrier 440 that supports the first carrier 430. For example, the lens carrier illustrated in FIGS. 4A and 4B (e.g., the lens carrier of FIG. 4) may be the first carrier 430. The lens carrier 460 may be configured to move both the first carrier 430 and the second carrier 440 relative to the camera housing 410 in a direction perpendicular to the optical axis OA by using an actuator or to move the first carrier 430 relative to the second carrier 440 and the camera housing 410 in the direction of the optical axis OA by using the actuator.

The first carrier 430 may be seated on the second carrier 440 (e.g., in the +z-axis direction or a first optical axis direction ①). For example, the first carrier 430 may be connected to the second carrier 440 in a second optical axis direction ②. At least a portion of the first carrier 430 may be accommodated in an opening 441 of the second carrier 440. The first carrier 430 may be movable relative to the second carrier 440 in the direction of the optical axis OA and may be configured to move together with the second carrier 440 when the second carrier 440 moves relative to the camera housing 410.

The first carrier 430 may be connected to the second carrier 440 so as to be movable in the direction of the optical axis OA. For example, the first carrier 430 may be connected to the second carrier 440 through the piezoelectric motor 450. The first carrier 430 may move relative to the second carrier 440 and the camera housing 410 in the first optical axis direction ① and the second optical axis direction ② by using a driving force generated from the piezoelectric motor 450 and thus may move the lens 421 in the first optical axis direction ① and the second optical axis direction ②. For example, the first carrier 430 may be referred to as an AF carrier that moves the lens 421 for the auto focus (AF) function.

The first carrier 430 may include a frame 431 to which the lens assembly 420 is coupled and a connecting member 433 disposed on the outside of the frame 431. The frame 431 may be a part to which the lens barrel 423 is coupled and may have, in a central portion thereof, an opening into which at least a portion of the lens barrel 423 is inserted. The connecting member 433 may extend from an outside surface of the frame 431 and may integrally move together with the frame 431. For example, when the connecting member 433 is moved by an external force (e.g., a force by vibration of the piezoelectric motor 450), the frame 431 may also move together with the connecting member 433.

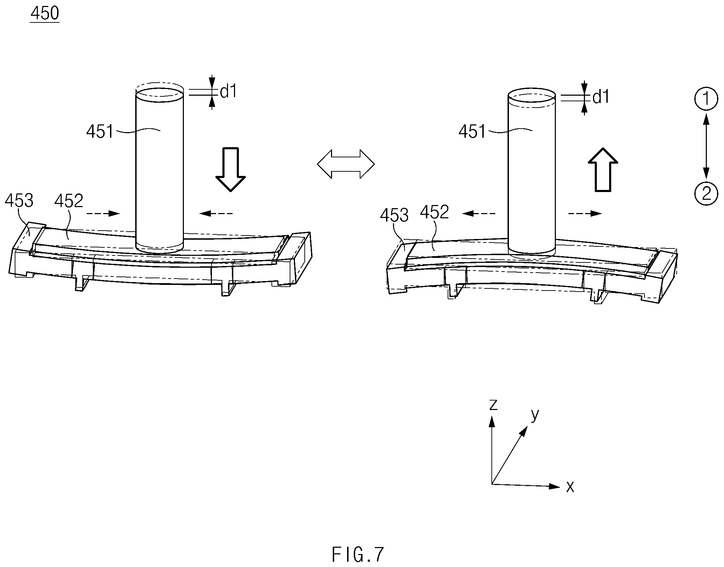

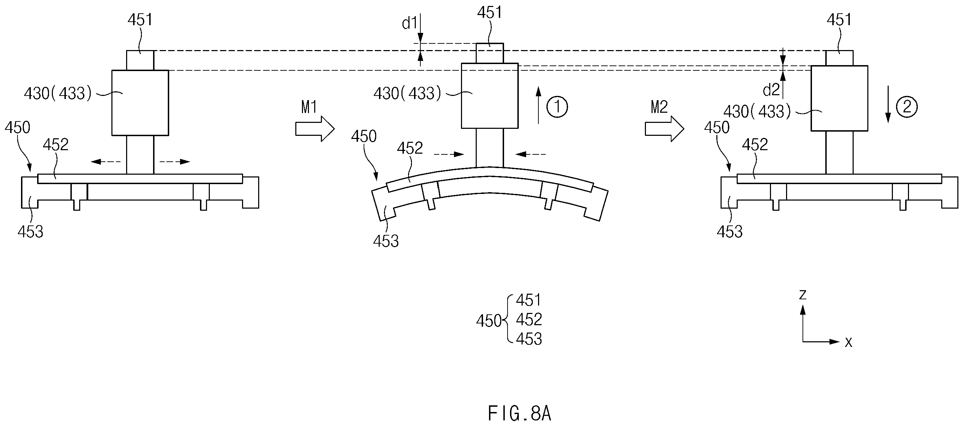

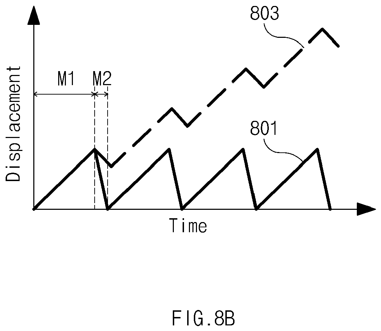

The connecting member 433 may be a part to which the piezoelectric motor 450 is connected, and the driving force of the piezoelectric motor 450 may act on the connecting member 433. For example, a rod 451 of the piezoelectric motor 450 may be inserted into the connecting member 433, and vibration displacement generated in the piezoelectric motor 450 may be transmitted to the connecting member 433 and the first carrier 430 through the rod 451. An operation in which the first carrier 430 is moved by the vibration displacement of the piezoelectric motor 450 will be described below in detail with reference to FIGS. 7, 8A, and 8B.

The second carrier 440 may support the first carrier 430 and may move together with the first carrier 430 when the second carrier 440 moves. The piezoelectric motor 450 may be disposed on at least a portion of the second carrier 440. For example, a seating portion 442 on which the piezoelectric motor 450 is disposed may be formed on a corner portion of the second carrier 440. The piezoelectric motor 450 may be disposed on the seating portion 442 of the second carrier 440, and the first carrier 430 may be connected to the piezoelectric motor 450 and may be seated on the second carrier 440 accordingly. When the first carrier 430 is moved by an external force (e.g., the driving force of the piezoelectric motor 450) applied to the first carrier 430 in the direction of the optical axis OA, the second carrier 440 may be separated from the movement of the first carrier 430.

The second carrier 440 may be disposed in the camera housing 410 so as to be movable. For example, the second carrier 440 may be configured to move on the base 413 of the camera housing 410 (e.g., the base 413 of FIGS. 4A and 4B) in a direction substantially perpendicular to the optical axis OA. Although not illustrated, the second carrier 440 may be connected with an OIS driving unit (or, an OIS driving motor). The second carrier 440 may move relative to the camera housing 410 in a direction (e.g., the x-axis direction and the y-axis direction) substantially perpendicular to the optical axis OA by using a driving force generated from the OIS driving unit and thus may move the lens 421 in the direction substantially perpendicular to the optical axis OA. For example, the second carrier 440 may be referred to as an OIS carrier that moves the lens 421 for the camera-shake correction function or the optical image stabilization (OIS) function. Although the OIS driving unit is not illustrated in FIG. 5, the OIS driving unit may be implemented with various types of actuators including a voice coil motor or a piezoelectric motor.

According to an embodiment of the disclosure, the lens assembly 420 may move together with the first carrier 430 and the second carrier 440 relative to the camera housing 410 when a driving force is applied to the second carrier 440 to move the second carrier 440 in a direction perpendicular to the optical axis OA. The lens assembly 420 may move together with the first carrier 430 relative to the second carrier 440 and the camera housing 410 when a driving force is applied to the first carrier 430 to move the first carrier 430 in the direction of the optical axis OA.

The piezoelectric motor 450 may be disposed on the seating portion 442 of the second carrier 440 and may be connected to the first carrier 430. For example, the piezoelectric motor 450 may connect the first carrier 430 to the second carrier 440 such that the first carrier 430 is movable in the direction of the optical axis OA. The piezoelectric motor 450 may generate a driving force based on vibration displacement of a piezoelectric element. For example, the piezoelectric motor 450 may be an AF driving unit (or, an AF driving motor) that provides a driving force for the AF function. Although not illustrated, the camera module 400 may further include a substrate, and the piezoelectric motor 450 may be electrically connected with the substrate. For example, the piezoelectric motor 450 may receive an electrical signal through the substrate. According to various embodiments, the substrate of the camera module 400 may be electrically connected with a printed circuit board of the electronic device 300 (e.g., the printed circuit board 350 of FIG. 3C). The electrical connection may mean connection that enables transmission/reception of various electrical signals.

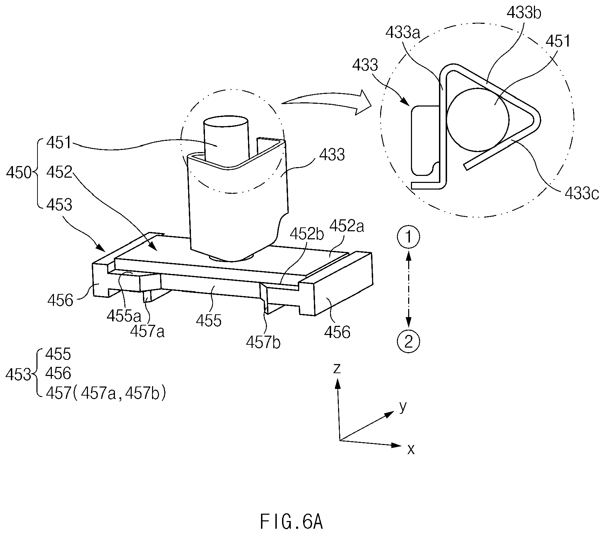

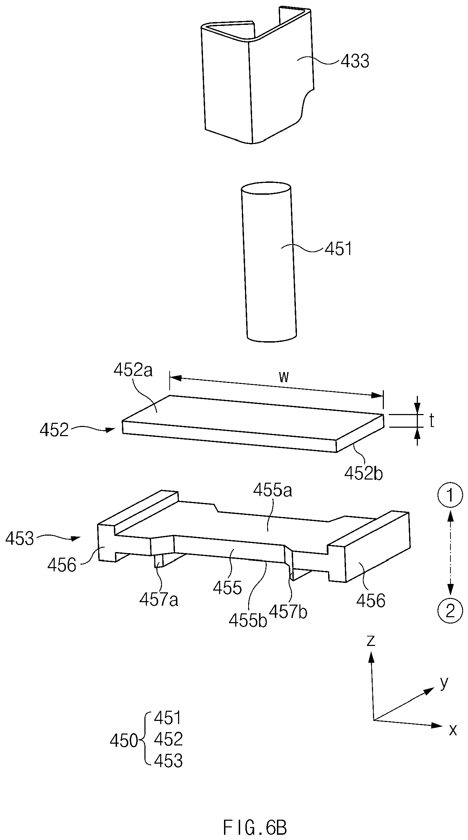

FIG. 6A is a perspective view of the piezoelectric motor and the connecting member of the camera module according to an embodiment. FIG. 6B is an exploded perspective view of the piezoelectric motor and the connecting member of the camera module according to an embodiment.

Referring to FIGS. 6A and 6B, the camera module 400 according to an embodiment may include the piezoelectric motor 450 and the connecting member 433 to which the piezoelectric motor 450 is connected. The connecting member 433 may be a portion of the first carrier (e.g., the first carrier 430 of FIG. 5). For example, the connecting member 433 may be coupled to the frame 431 of the first carrier 430.

In an embodiment, the piezoelectric motor 450 may provide a driving force to move the connecting member 433 in the optical axis directions ① and/or ②. For example, the piezoelectric motor 450 may generate the driving force, based on a change in the shape of piezoelectric material (e.g., piezoelectric ceramic) depending on application of a voltage. The connecting member 433 may be moved in the first optical axis direction ① or the second optical axis direction ② by the piezoelectric motor 450. In various embodiments, the piezoelectric motor 450 may be referred to as a piezoelectric linear actuator or an ultrasonic linear actuator.

The piezoelectric motor 450 may include the rod 451, a piezoelectric element 452, and an elastic body 453. For example, the piezoelectric motor 450 may have a structure in which the rod 451, the piezoelectric element 452, and the elastic body 453 are sequentially coupled in the optical axis directions ① and ②.

The rod 451 may be disposed on one surface of the piezoelectric element 452. For example, the rod 451 may be coupled to a first surface 452a of the piezoelectric element 452 that faces the first optical axis direction ①. In an example, the rod 451 may be coupled to a central portion of the first surface 452a of the piezoelectric element 452. The rod 451 may move in the first optical axis direction ① and/or the second optical axis direction ② depending on vibration of the piezoelectric element 452 and the elastic body 453.

The rod 451, or a portion thereof, may extend in a direction substantially perpendicular to the piezoelectric element 452 (e.g., the first surface 452a and the second surface 452b). For example, the rod 451 may be formed in a cylindrical shape, and the length of the rod 451 may remain constant. The rod 451 may be formed of a carbon-based material. For example, the rod 451 may be formed of a carbon fiber reinforced plastic (CFRP) material. However, the shape or material of the rod 451 is not limited to the above-described contents.

The rod 451 may provide a movement of the first carrier (e.g., the first carrier 430 of FIG. 5) by transmitting vibration displacement from the piezoelectric element 452, occurring depending on contraction or expansion of the piezoelectric element 452, to the connecting member 433. At least a portion of the rod 451 may be inserted into the connecting member 433 in the state in which the rod 451 is attached to the first surface of the piezoelectric element 452. The rod 451 may be capable of both an operation of moving together with the connecting member 433 and an operation of moving separately from the connecting member 433. For example, the rod 451 may be coupled with the connecting member 433 to move together with or relative to the connecting member 433 depending on a moving speed. The moving speed of the rod 451 may be adjusted by controlling the speed at which the piezoelectric element 452 is contracted or expanded.

When a voltage is applied to the piezoelectric element 452, mechanical displacement such as expansion or contraction may occur depending on the direction of an electric field and the poling direction of the piezoelectric element 452. For example, the piezoelectric element 452 may be deformed when a voltage is applied thereto. The piezoelectric element 452 may be formed by using various piezoelectric elements or materials including piezoceramic, a piezo-polymer, or a piezo-composite. For example, the piezoelectric element 452 may be lead zirconate titanate (PZT)-based piezoelectric ceramic, but is not limited thereto.

The piezoelectric element 452 may be disposed on one surface of the elastic body 453. For example, the piezoelectric element 452 may be attached to an upper surface (e.g., a surface facing the first optical axis direction ①) of the elastic body 453. The piezoelectric element 452 may have a plate shape having a specified thickness t (e.g., a length in the z-axis direction) and/or a specified width w (e.g., a length in the x-axis direction). For example, the width w of the piezoelectric element 452 may be smaller than the width of the elastic body 453. According to various embodiments, the piezoelectric element 452 may include a bulk type piezoelectric element formed of one layer having a predetermined thickness and a multi-layer type piezoelectric element formed of a plurality of layers stacked one above another. The type of the piezoelectric element 452 is not limited to the aforementioned examples.

The piezoelectric element 452 may include the first surface 452a that faces the first optical axis direction ① and the second surface 452b the faces away from the first surface 452a, for example, faces the second optical axis direction ②. The rod 451 may be coupled to the first surface 452a of the piezoelectric element 452. The second surface 452b of the piezoelectric element 452 may be attached to the elastic body 453. For example, the piezoelectric element 452, when expanded or contracted, may be bent together with the elastic body 453 due to a difference in stiffness between the first surface 452a (e.g., a non-attached surface) and the second surface 452b (e.g., an attached surface) since the elastic body 453 is attached to the second surface 452b. Deformation of the piezoelectric element 452 and the elastic body 453 will be described below with reference to FIG. 7.

The elastic body 453 may be formed of a material (e.g., a metallic material) having a predetermined elasticity (e.g., the elastic body 453 may be resiliently deformable). For example, the elastic body 453 may be formed of a metal elastic body capable of being partially bent by deformation of the piezoelectric element 452. The piezoelectric element 452 may be attached to an upper surface 455a (e.g., a third surface) of the elastic body 453, and the upper surface 455a may face the first optical axis direction ①. A lower surface 455b (e.g., a fourth surface) of the elastic body 453 may be supported on the second carrier (e.g., the second carrier 440 of FIG. 5). When the piezoelectric element 452 is expanded or contracted based on a voltage applied thereto, the elastic body 453 may be convexly bent in the first optical axis direction ① together with the piezoelectric element 452, or may vibrate in the direction of the optical axis OA while being convexly bent in the second optical axis direction ②.

The elastic body 453 may include at least one of a base portion 455, extending portions 456, and one or more protruding portions 457. The piezoelectric element 452 may be disposed on the base portion 455. For example, the base portion 455 may include the upper surface 455a to which the piezoelectric element 452 is attached and the lower surface 455b facing away from the upper surface 455a. The lower surface 455b may face the second optical axis direction ②. The extending portions 456 and the protruding portions 457 may extend or protrude from the base portion 455.

The extending portions 456 may be formed at opposite ends of the base portion 455 that face in a width direction (e.g., the x-axis direction). The extending portions 456 may extend from the opposite ends of the base portion 455 that face in the width direction and may have a greater thickness than the base portion 455. For example, the lengths of the extending portions 456 in the direction of the optical axis OA may be greater than the length of the base portion 455 in the direction of the optical axis OA. The extending portions 456 may partially surround opposite ends of the piezoelectric element 452 that face in the direction of the width w, the piezoelectric element 452 being disposed on the base portion 455.

The extending portions 456 may be portions for increasing vibration displacement of the piezoelectric motor 450 and may be referred to as a displacement expansion structure. For example, the extending portions 456 may increase the weights (or, masses) of the opposite end portions of the elastic body 453 and thus may increase vibration displacement or bending displacement of the elastic body 453 (or, the piezoelectric element 452) using an inertia effect when the elastic body 453 vibrates. For example, due to the inertial force depending on the weights of the extending portions 456, vibration of the opposite end portions of the elastic body 453 may have higher amplitude in the direction of the optical axis OA. Since the extending portions 456 extend from the base portion 455, the elastic body 453 may be configured to integrally include the displacement expansion structure. The sizes of the extending portions 456 may be diversely modified depending on design conditions. According to various embodiments, the extending portions 456 may also be referred to as weight addition portions or mass portions.

The one or more protruding portions 457 may be formed on the lower surface 455b of the base portion 455. For example, one or more protruding portions 457 may protrude from the lower surface 455b of the base portion 455 by a predetermined length. The one or more protruding portions 457 may protrude in a direction (e.g., the second optical axis direction ②) substantially perpendicular to the lower surface 455b of the base portion 455. For example, a protruding portion 457a, 457b may be formed in a shape that protrudes from the lower surface of the base portion 455 in the -z-axis direction, but extends in the y-axis direction.

The one or more protruding portions 457 may be located between the extending portions 456. Two protruding portions 457 may be formed to be symmetrical to each other with respect to the rod 451. For example, the protruding portions 457 may include a first protruding portion 457a and a second protruding portion 457b spaced apart from each other. The first protruding portion 457a and the second protruding portion 457b may be spaced apart from the rod 451 by substantially the same distance in the x-axis direction. For example, the distance between the first protruding portion 457a and a first extending portion on one side (e.g., the extending portion 456 in the -x-axis direction based on the drawing) may be substantially the same as the distance between the second protruding portion 457b and a second extending portion on an opposite side (e.g., the extending portion 456 in the +x-axis direction based on the drawing).

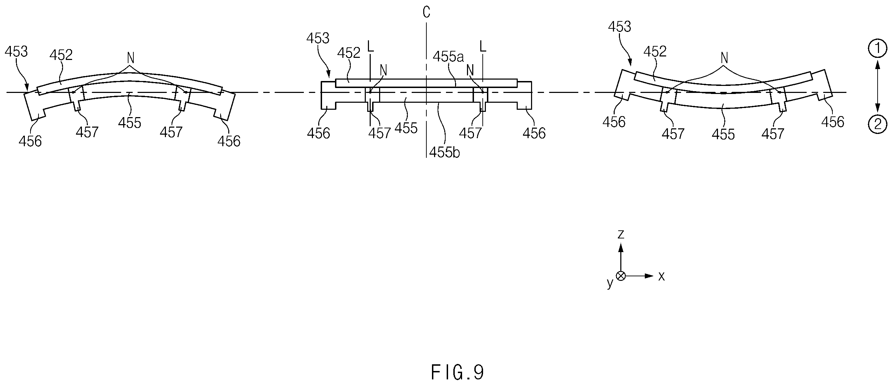

The one or more protruding portions 457 may be portions supported on the second carrier 440. The one or more protruding portions 457 may be formed at positions corresponding to portions having the smallest vibration displacement when the piezoelectric motor 450 vibrates. Accordingly, transmission of vibration to other components of the camera module 400 may be reduced. For example, the one or more protruding portions 457 may be referred to as a vibration isolation structure as well as a support structure. Since the one or more protruding portions 457 extend from the base portion 455, the elastic body 453 may be configured to integrally include the vibration isolation structure. The positions of the one or more protruding portions 457 will be described below in detail with reference to FIG. 9.

The connecting member 433 may be coupled to the rod 451 of the piezoelectric motor 450. The connecting member 433 may surround an outer circumferential surface of the rod 451. The connecting member 433 may include a first portion 433a, a second portion 433b extending from the first portion 433a at a predetermined angle, and a third portion 433c extending from the second portion 433b at another, or the same, predetermined angle. The first portion 433a, the second portion 433b, and the third portion 433c may make contact with the rod 451. For example, the connecting member 433 and the rod 451 may have a three-point contact structure when the connecting member 433 and the rod 451 are viewed in the second optical axis direction ②. The connecting member 433 may make contact with the rod 451 inserted into the connecting member 433 while maintaining a predetermined pre-load. For example, the connecting member 433 may make contact with the outer circumferential surface of the rod 451 while elastically pressing the rod 451. The connecting member 433 may be formed to have an elastic force. For example, the connecting member 433 may include a metal spring. However, the shape and/or type of the connecting member 433 are not limited to the illustrated embodiment. According to various embodiments, the connecting member 433 may further include a fourth portion (not illustrated) that extends from the third portion 433c and may be configured to make four-point contact with the rod 451. It will be appreciated that various embodiments include further portion(s) and further contact point(s), in a similar manner.

The connecting member 433 may be a portion of the first carrier 430 to which the driving force of the piezoelectric motor 450 is transmitted. The connecting member 433 may be configured to move together with the rod 451 or to be relatively fixed without moving together with the rod 451, based on the moving speed of the rod 451 when the rod 451 of the piezoelectric motor 450 moves in the direction of the optical axis OA (e.g., a stick-slip motion). For example, the connecting member 433 may move together with the rod 451 when the rod 451 slowly moves at a speed lower than a predetermined speed (e.g., stick). In contrast, the connecting member 433 may not move together with the rod 451 when the rod 451 rapidly moves at a speed higher than the predetermined speed (e.g., slip). An operation in which the connecting member 433 is moved by the piezoelectric motor 450 will be described below in detail with reference to FIGS. 8A and 8B.

In the embodiment disclosed in the disclosure, it has been described that the connecting member 433 is included in the first carrier 430. However, the disclosure is not limited thereto, and according to various embodiments, the connecting member 433 may be implemented as one part of the piezoelectric motor 450. For example, the connecting member 433, the rod 451, the piezoelectric element 452, and the elastic body 453 may form one piezoelectric motor assembly, and the connecting member 433 of the piezoelectric motor assembly may be connected to a first frame (e.g., the frame 431 of FIG. 5).

FIG. 7 illustrates driving of the piezoelectric motor according to an embodiment.

Referring to FIG. 7, the piezoelectric motor 450 according to an embodiment may include the elastic body 453, the piezoelectric element 452 attached to the elastic body 453, and the rod 451 attached to the piezoelectric element 452. The components of the piezoelectric motor 450 illustrated in FIG. 7 are identical or similar to the components of the piezoelectric motor 450 illustrated in FIGS. 6A and 6B, and repetitive descriptions will hereinafter be omitted.

The piezoelectric motor 450 may linearly move the rod 451 in the optical axis directions ① and ② as the elastic body 453 is bent by expansion or contraction of the piezoelectric element 452. Accordingly, the piezoelectric motor 450 may provide a driving force to move the first carrier (e.g., the first carrier 430 of FIG. 5) in the optical axis directions ① and ②. For example, the piezoelectric element 452 may be contracted or expanded in the direction of the width w of the piezoelectric element 452 based on a voltage applied thereto. The elastic body 453, or a portion thereof, may be bent in the first optical axis direction ① or the second optical axis direction ② by the contraction or expansion of the piezoelectric element 452, and the rod 451 may move linearly in the first optical axis direction ① or the second optical axis direction ② in response to a bending direction of the piezoelectric element 452.

Referring to the drawing on the left side of FIG. 7, in an embodiment, a voltage for contracting the piezoelectric element 452 in the width direction (e.g., the direction of the width w in FIG. 6B) may be applied to the piezoelectric motor 450. The piezoelectric element 452 may be configured such that, when the piezoelectric element 452 is contracted in the direction of the width w (e.g., the x-axis direction), the degree of contraction of a portion adjacent to the lower surface 455b is smaller than the degree of contraction of a portion adjacent to the upper surface 455a due to a difference in stiffness between the lower surface 455b (e.g., an attached surface) and the upper surface 455a (e.g., a non-attached surface). Accordingly, the piezoelectric element 452 may be bent in the second optical axis direction ② that the lower surface 455b faces, and the elastic body 453 may be bent in the second optical axis direction ② together with the piezoelectric element 452. For example, the elastic body 453 and the piezoelectric element 452 may be deformed in a shape in which a central portion is convex in the second optical axis direction ②. The rod 451 may move linearly in the second optical axis direction ② by a first distance d1 as the elastic body 453 is bent in the second optical axis direction ②.

In an embodiment, in a case in which an electric field facing the same direction as the poling direction of the piezoelectric element 452 is formed for the piezoelectric element 452, the piezoelectric element 452 may be contracted in the direction of the width w. For example, the poling direction of the piezoelectric element 452 may be substantially parallel to the optical axis directions, and when an electric field is formed in the same direction as the poling direction, the piezoelectric element 452 may expand in the poling direction (e.g., the optical axis direction ① or ②, or the direction of the thickness t in FIG. 6B) and may contract in the width direction due to the Poisson's ratio.

Referring to the drawing on the right side of FIG. 7, in an embodiment, a voltage for expanding the piezoelectric element 452 in the width direction (e.g., the direction of the width w in FIG. 6B) may be applied to the piezoelectric motor 450. The piezoelectric element 452 may be configured such that when the piezoelectric element 452 is expanded in the width direction (e.g., the x-axis direction), the degree of expansion of a portion adjacent to the lower surface 455b is smaller than the degree of expansion of a portion adjacent to the upper surface 455a due to a difference in stiffness between the lower surface 455b (e.g., an attached surface) and the upper surface 455a (e.g., a non-attached surface). Accordingly, the piezoelectric element 452 may be bent in the first optical axis direction ① that the upper surface 455a faces, and the elastic body 453 may be bent in the first optical axis direction ① together with the piezoelectric element 452. For example, the elastic body 453 and the piezoelectric element 452 may be deformed in a shape in which a central portion is convex in the first optical axis direction ①. The rod 451 may move linearly in the first optical axis direction ① by the first distance d1 as the elastic body 453 is bent in the first optical axis direction ①.

In an embodiment, in a case in which an electric field facing the direction opposite to the poling direction of the piezoelectric element 452 is formed for the piezoelectric element 452, the piezoelectric element 452 may be expanded in the direction of the width w. For example, the poling direction of the piezoelectric element 452 may be substantially parallel to the optical axis directions, and when an electric field is formed in the direction opposite to the poling direction, the piezoelectric element 452 may contract in the poling direction (e.g., the optical axis direction ① or ②, or the direction of the thickness t in FIG. 6B) and may expand in the width direction due to the Poisson's ratio.

In an embodiment of the disclosure, the piezoelectric motor 450 may have a bonding structure of the piezoelectric element 452 and the elastic body 453 and may be implemented such that bending vibration of the piezoelectric element 452 and the elastic body 453 is formed by stretching vibration of the piezoelectric element 452 and the bending vibration is converted into linear vibration of the rod 451 in the optical axis directions ① and ②.

FIG. 8A illustrates an operation of moving the first carrier using the piezoelectric motor according to an embodiment. FIG. 8B illustrates the operation of moving the first carrier using the piezoelectric motor according to an embodiment.

Referring to FIG. 8A, the camera module 400 according to an embodiment may include the first carrier 430 and the piezoelectric motor 450. The camera module 400 may move the first carrier 430 (e.g., the first carrier 430 of FIG. 5) in the optical axis directions ① and ② by driving the piezoelectric motor 450. For example, the first carrier 430 (e.g., a part thereof) illustrated in FIG. 8A may be the connecting member 433. The first carrier 430 may move in the optical axis directions together with the lens assembly 420, which may be related to the AF function.

The piezoelectric motor 450 and the connecting member 433 may operate using a smooth impact drive mechanism (SIDM). For example, the operating principle of a general SIDM may be based on an inertial force and a frictional force and may be understood as a stick-slip motion. When the piezoelectric element 452 are slowly contracted or expanded, the rod 451 may move at a low speed and may move together with the connecting member 433, and in contrast, when the piezoelectric element 452 is rapidly contracted or expanded, the rod 451 may move at a high speed and may move relative to the connecting member 433 without moving together with the connecting member 433.

Referring to FIGS. 8A and 8B, the piezoelectric motor 450 may move the connecting member 433 as the piezoelectric motor 450 is driven in a first motion M1 and a second motion M2. In the first motion M1, when the piezoelectric element 452 is slowly expanded in the width direction (e.g., the x-axis direction), the rod 451 may slowly (e.g., relative to the speed of the second motion M2) move in the first optical axis direction ①, and the connecting member 433 may be moved in the first optical axis direction ① by the first distance d1 together with the rod 451 by a frictional force between the connecting member 433 and the rod 451 as the connecting member 433 and the rod 451 make pressure contact with each other. In the second motion M2, when the piezoelectric element 452 is rapidly contracted in the width direction, the rod 451 may rapidly (e.g., relative to the speed of the first motion M1) move in the second optical axis direction ② by the first distance d1, and the connecting member 433 may not move together with the rod 451 due to the inertial force of the connecting member 433 and may remain at the position moved by the first motion M1 while sliding from the rod 451 or may move in the second optical axis direction ② by a distance shorter than the first distance d1. According to the illustrated embodiment, when the first motion M1 and the second motion M2 are performed, the connecting member 433 may be moved by a second distance d2 shorter than the first distance d1. However, the disclosure is not limited thereto, and according to various embodiments, the first distance d1 and the second distance d2 may be substantially the same as each other.

In an embodiment, the piezoelectric motor 450 may move the connecting member 433 by a desired distance by repeating the first motion M1 and the second motion M2. For example, when the first motion M1 and the second motion M2 are performed once, the connecting member 433 may move in the first optical axis direction ① by the second distance d2, and the piezoelectric motor 450 may repeat the first motion M1 and the second motion M2 to move the connecting member 433 in the first optical axis direction ① by a desired distance. For example, when the first operation M1 and the second operation M2 are repeated three times, the connecting member 433 may move in the first optical axis direction ① by three times the second distance d2 or up to three times the second distance d2.

FIG. 8B is a graph depicting a change in the positions of the rod 451 and the connecting member 433 over time. In the graph, a solid line 801 may refer to the displacement of the rod 451 in the optical axis direction ② or ② depending on contraction or expansion of the piezoelectric element 452, and a dotted line 803 may refer to the displacement of the connecting member 433 in the optical axis direction ① or ②. For example, the rod 451 may more rapidly move in the second motion M2 than in the first motion M1, and thus the slope of the solid line 801 in the time interval in which the second motion M2 is performed may be greater than that in the time interval in which the first motion M1 is performed.

The first motion M1 may be performed since the frictional force between the rod 451 and the connecting member 433 is greater than the inertial force of the connecting member 433 (or, the first carrier 430) and may be understood as a sticking motion. The second motion M2 may be performed since the inertial force of the connecting member 433 (or, the first carrier 430) is greater than the frictional force between the rod 451 and the connecting member 433 and may be understood as a slipping motion.

FIGS. 8A and 8B illustrate the operation of the piezoelectric motor 450 for moving the connecting member 433 in the first optical axis direction ① by a predetermined distance, and the direction of movement of the connecting member 433 may be changed depending on the direction in which the piezoelectric element 452 is deformed in the first motion M1 and the second motion M2. For example, the piezoelectric element 452 may be slowly contracted in the first motion M1 and may be rapidly expanded in the second motion M2, and the piezoelectric motor 450 may move the connecting member 433 by a predetermined distance in a direction toward the piezoelectric element 452 (e.g., the second optical axis direction ②).

FIG. 9 illustrates the elastic body and the piezoelectric element of the piezoelectric motor according to an embodiment.

Referring to FIG. 9, the piezoelectric motor according to an embodiment (e.g., the piezoelectric motor 450 of FIGS. 6A and 6B) may include the piezoelectric element 452 and the elastic body 453 attached or bonded to each other. FIG. 9 may be a view in which the rod (e.g., the rod 451 of FIGS. 6A and 6B) is omitted.

The piezoelectric element 452 and the elastic body 453 may form a vibrator of the piezoelectric motor 450. For example, the vibrator may include the elastic body 453 and the piezoelectric element 452 attached to the upper surface 455a (e.g., a surface facing the first optical axis direction ①) of the elastic body 453 and may form bending vibration by stretching vibration of the piezoelectric element 452. The vibrator of the piezoelectric motor 450 according to the illustrated embodiment may be a uni-morph type vibrator. Hereinafter, the vibrator is used as a term referring to a structure or part in which the elastic body 453 and the piezoelectric element 452 are bonded to each other.

The elastic body 453 may include the base portion 455, the extending portions 456 formed at the opposite ends of the base portion 455, and a plurality of protruding portions 457 formed on the lower surface 455b (e.g., a surface facing the second optical axis direction ②) of the base portion 455. The plurality of protruding portions 457 may extend from partial regions of the lower surface 455b of the base portion 455 in a direction (e.g., the second optical axis direction ②) substantially perpendicular to the lower surface 455b. For example, the plurality of protruding portions 457 may protrude from the lower surface 455b in the -z-axis direction and may extend in the y-axis direction by a predetermined length.

The plurality of protruding portions 457 may be formed at positions spaced apart from the extending portions 456 toward the center of the vibrator 452 and 453 by a specified distance. For example, when the vibrator 452 and 453 is viewed in the y-axis direction, a central axis C may be defined to pass through the center of the vibrator 452 and 453, and the plurality of protruding portions 457 may be located between the central axis C and the extending portions 456. The plurality of protruding portions 457 may be two and two protruding portions 457 may be formed to be symmetrical to each other with respect to the central axis C.

The plurality of protruding portions 457 may be portions (structures) that are supported on at least portions of the second carrier 440 such that the piezoelectric motor 450 is seated on the second carrier 440. To reduce vibration transmitted to the second carrier 440 by vibration of the vibrator 452 and 453 when the piezoelectric motor 450 is driven, the plurality of protruding portions 457 may be formed at positions where vibration displacement in the optical axis directions ① and ② is minimal.

As illustrated in FIG. 9, the vibrator 452 and 453 may undergo bending vibration in the optical axis directions ① and ② by contraction or expansion of the piezoelectric element 452. When the vibrator 452 and 453 vibrates, at least portions (some points or regions) of the vibrator 452 and 453 may not vibrate, and the vibration displacements thereof may be substantially 0. The non-vibrating portions of the vibrator 452 and 453, the vibration displacements of which are substantially 0, may be defined as nodal positions N (e.g., nodal points or a nodal line). For example, when the vibrator 452 and 453 vibrates in the optical axis directions ① and ②, one or more nodal positions N, the positions of which are maintained without being changed, may be formed in at least portions of the vibrator 452 and 453. The vibrator 452 and 453 may have two nodal positions N symmetrical to each other with respect to the central axis C, and the two nodal positions N may overlap the vibrator 452 and 453. For example, when the vibrator 452 and 453 is viewed in the y-axis direction, the nodal positions N may be displayed as two points (e.g., nodal points) at positions symmetrical to each other with respect to the central axis C on the vibrator 452 and 453. The nodal positions N may be located on the same line without moving even when the vibrator 452 and 453 vibrates.

The plurality of protruding portions 457 may be formed at positions corresponding to the nodal positions N of the vibrator 452 and 453. The plurality of protruding portions 457 may be formed at positions overlapping the nodal positions N in the optical axis directions ① and (2). For example, two protruding portions 457 (e.g., the first protruding portion 457a and the second protruding portion 457b of FIGS. 6A and 6B) may be formed to overlap two nodal positions N, respectively. The plurality of protruding portions 457 may protrude from partial regions of the lower surface 455b that overlap the nodal positions N when the lower surface 455b of the base portion 455 is viewed from above. Referring to FIG. 9, virtual lines L passing through the nodal positions N and parallel to the optical axis directions ① and (2) may be defined for the vibrator 452 and 453, and the plurality of protruding portions 457 may partially overlap the virtual lines L. When the vibrator 452 and 453 is viewed from above the piezoelectric element 452, the nodal positions N may be displayed as a line (e.g., a nodal line) parallel to the y-axis and may partially overlap at least parts of the plurality of protruding portions 457 extending in the y-axis direction.

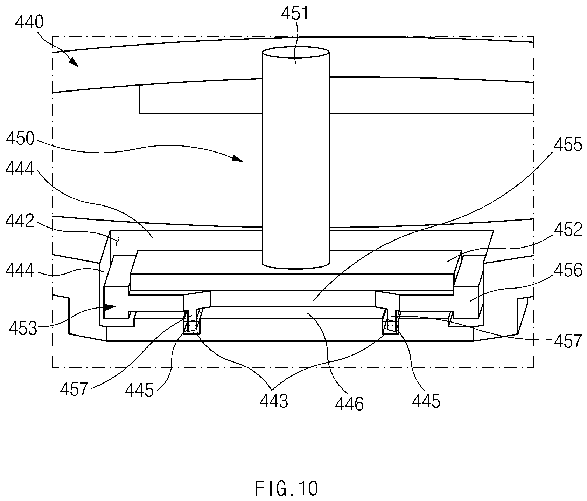

FIG. 10 illustrates the second carrier and the piezoelectric motor of the camera module according to an embodiment.

FIG. 10 illustrates a coupling structure or a bonding structure of the second carrier and the piezoelectric motor.

Referring to FIG. 10, the camera module 400 according to an embodiment may include the second carrier 440 and the piezoelectric motor 450 disposed on the second carrier 440. The piezoelectric motor 450 may be according to an embodiment as described above; for example, the piezoelectric motor 450 may include the rod 451, the piezoelectric element 452, and the elastic body 453. For example, the piezoelectric motor 450 may be connected with the first carrier (e.g., the first carrier 430 of FIG. 5) in a state of being supported on the second carrier 440.

The second carrier 440 may include the seating portion 442 on which the piezoelectric motor 450 is disposed. The seating portion 442 may be formed on a corner portion of the second carrier 440 (e.g., refer to FIG. 5). At least part of the corner portion of the second carrier 440 may be recessed to form the seating portion 442. For example, the seating portion 442 may be formed in a recess form and may form a space in which at least a portion of the piezoelectric motor 450 is accommodated (e.g., an accommodating space or accommodating portion). In certain embodiments, as many seating portions 442 as piezoelectric motors 450 may be formed.

The seating portion 442 may surround the vibrator (e.g., the piezoelectric element 452 and the elastic body 453) of the piezoelectric motor 450 and may be spaced apart from the vibrator 452 and 453 by a specified gap to provide a space for vibration and/or deformation of the vibrator 452 and 453. For example, the seating portion 442 may be formed such that an inner wall 444 is spaced apart from the piezoelectric element 452 and the elastic body 453 by the specified gap. The specified gap may mean a gap by which the piezoelectric element 452 and the elastic body 453 do not make contact with the inner wall 444 when the piezoelectric element 452 and the elastic body 453 vibrate. For example, the base portion 455 and the extending portions 456 of the elastic body 453 may not make contact with the inner wall 444 of the seating portion 442. For example, the specified gap may be determined based on a displacement of the piezoelectric element 452 and/or the elastic body 453 due to vibration (e.g., a maximum displacement which can arise for the vibrator 452, 543 due to vibration). In certain embodiments, as illustrated in FIG. 10, a space may also be provided around the extending portions 456 to allow for movement of the extending portions 456 due to vibration of the piezoelectric motor 450 without contact with the inner wall 444 or seating portion 442. For example, a space or recess may be provided in the seating portion 442 such that the extending portions 456 may move (e.g., in the -z axis direction shown in FIG. 9) due to contraction or expansion of the piezoelectric element 452 and the elastic body 453 without contacting the seating portion 442. Accordingly, deterioration in vibration due to collision may be prevented, and vibration transmitted to the second carrier 440 may be reduced. However, the shape of the seating portion 442 is not limited to the illustrated embodiment and may be modified into various shapes.

The seating portion 442 may have, on a surface facing the elastic body 453, one or more support recesses 443 in which the one or more protruding portions 457 of the piezoelectric motor 450 are disposed. In the embodiment illustrated in FIG. 10 and described here/below, there are two protruding portions 457 and two corresponding support recesses 443; however, it will be appreciated that this example may extend to cases with a different number of protruding portions 457 and support recesses 443. For example, the protruding portions 457 may be at least partially accommodated in the support recesses 443 and may be movably supported in the support recesses 443 through bonding. On a facing surface 446 of the seating portion 442 that faces the lower surface of the base portion 455 (e.g., the lower surface 455b of FIG. 6B), the support recesses 443 may be formed at positions corresponding to the protruding portions 457. The facing surface 446 may extend substantially perpendicular to the inner wall 444.

At least portions of the facing surface 446 may be recessed in a shape corresponding to the protruding portions 457 to form the support recesses 443. Bonding members 445 to which the protruding portions 457 are movably coupled may be accommodated in the support recesses 443. For example, the bonding members 445 may provide a specified level of bonding force (or, constraint force) such that the piezoelectric motor 450 is not separated from the second carrier 440 (e.g., such that the piezoelectric motor 450 is not separated from the second carrier 440 when in use) and may be bonded with the protruding portions 457 such that the protruding portions 457 are movable depending on bending vibration (or, bending deformation) of the elastic body 453 when the piezoelectric motor 450 is driven.

The support recesses 443 may be formed such that inside surfaces are spaced apart from the protruding portions 457. The bonding members 445 may fill spaces between the inside surfaces of the support recesses 443 and the outside surfaces of the protruding portions 457. For example, when the elastic body 453 vibrates, the protruding portions 457 may move in an arc in the left and right directions. Since gaps are formed between the inside surfaces of the support recesses 443 and the protruding portions 457, the protruding portions 457 may move in the support recesses 443.

The bonding members 445 may be formed of a material having a predetermined viscoelasticity and/or fluidity. For example, the bonding members 445 may include a resin material (e.g., silicone or resin) in a gel or sol form. According to various embodiments, the bonding members 445 may be formed by filling the support recesses 443 with a liquid material having a predetermined viscosity and thereafter curing (e.g., UV curing or thermally curing) the liquid material. However, the material and/or the forming method of the bonding members 445 are not limited to the above-described example.

The protruding portions 457 of the elastic body 453 may be movably coupled to the bonding members 445 filled in the support recesses 443. For example, at least parts of the protruding portions 457 may be surrounded by the bonding members 445. The at least parts of the protruding portions 457 may be inserted between the bonding members 445 or may be bonded with the bonding members 445 with a predetermined strength. According to various embodiments, a coupling between the protruding portions 457 and the bonding members 445 may be implemented by filling the support recesses 443 with a liquid material that forms the bonding members 445 and thereafter curing the liquid material in a state in which parts of the protruding portions 457 are immersed in the liquid material, but is not limited thereto.

The piezoelectric motor 450 according to the embodiment disclosed in the disclosure may be coupled to (or, supported on) the second carrier 440 through the protruding portions 457, and the protruding portions 457 may be formed at positions corresponding to the nodal positions (e.g., the nodal positions N of FIG. 9) where the vibration displacement of the vibrator (e.g., the piezoelectric element 452 and the elastic body 453) is substantially 0. Accordingly, when the vibrator 452 and 453 vibrates as the piezoelectric motor 450 is driven, unnecessary vibration transmitted to the second carrier 440 may be reduced, and noise depending on vibration/collision between parts included in the camera module 400 may be reduced. In certain embodiments, while the rod 451 has been described as being coupled to the piezoelectric element 452, it will be appreciated that the rod 451 may be coupled more generally to the vibrator (e.g., the vibrator comprising the piezoelectric element 452 and the elastic body 453). Here, for example, the rod 451 may be coupled to the piezoelectric element 452 as described above, or to the elastic body 453 as seen in certain embodiments disclosed herein, or to another component included in the vibrator.

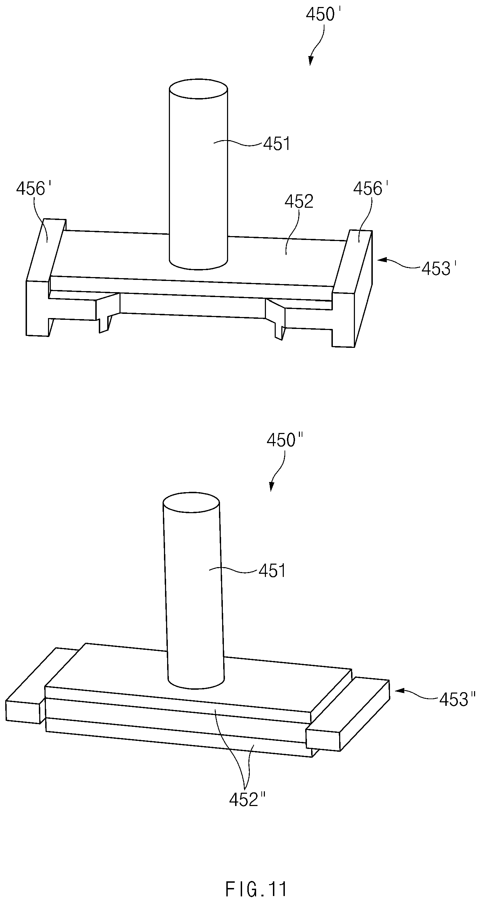

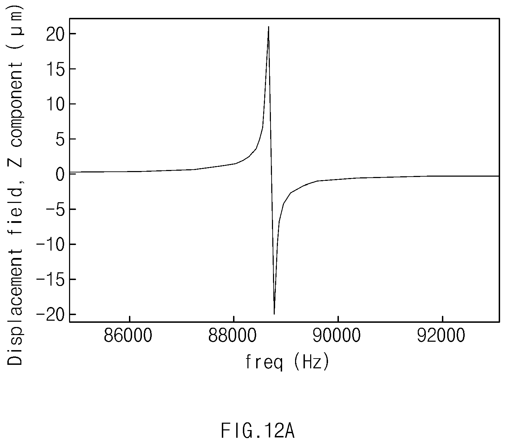

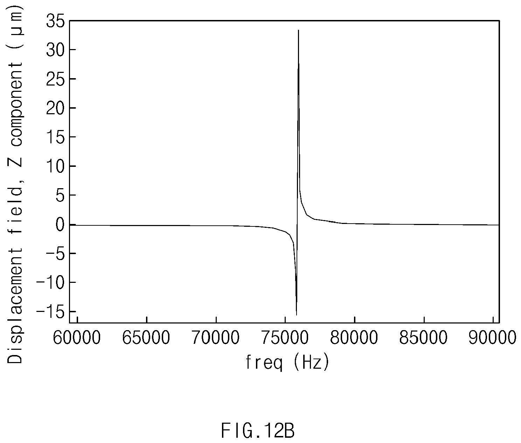

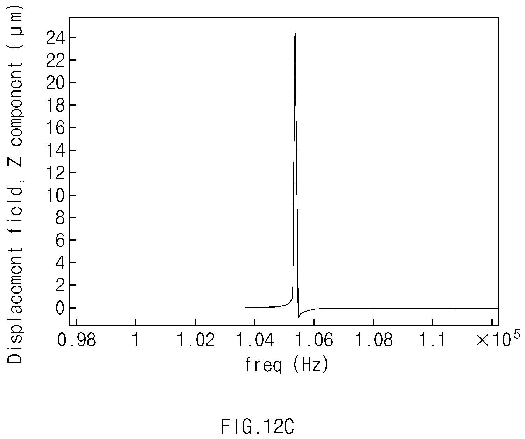

FIG. 11 illustrates a piezoelectric motor according to various embodiments. FIG. 12A is a graph depicting driving performance of the piezoelectric motor according to the first embodiment of FIG. 6A. FIG. 12B is a graph depicting driving performance of the piezoelectric motor according to the second embodiment of FIG. 11. FIG. 12C is a graph depicting driving performance of a piezoelectric motor according to a comparative example of FIG. 11.

FIG. 11 illustrates the piezoelectric motor 450' according to the second embodiment and the piezoelectric motor 450" according to the comparative example that have shapes (or, structures) different from the shape (or, structure) of the piezoelectric motor 450 according to the first embodiment illustrated in FIG. 6A. The first embodiment 450 and the second embodiment 450' are some of various embodiments of the disclosure, and the comparative example 450" is an example for comparison with the performances of the embodiments 450 and 450'.

Referring to FIG. 11, the piezoelectric motor 450' of the second embodiment and the piezoelectric motor 450" of the comparative example may include rods 451, piezoelectric elements 452 and 452", and elastic bodies 453' and 453". At least some of the components included in the piezoelectric motor 450' of the second embodiment and the piezoelectric motor 450" of the comparative example may be identical or similar to the components included in the piezoelectric motor 450 of the first embodiment described above. Hereinafter, repetitive descriptions will be omitted, and the following description will be focused on differences.

Referring to FIGS. 11 and 6A, the piezoelectric motor 450' according to the second embodiment may differ from the piezoelectric motor 450 according to the first embodiment in terms of the shape of the elastic body 453'. Specifically, the elastic body 453 of the first embodiment and the elastic member 453' of the second embodiment may differ from each other in terms of the sizes or weights of the extending portions 456 and 456'. For example, the extending portions 456' of the second embodiment may be formed to be larger or heavier than the extending portions 456 of the first embodiment.

Referring to FIGS. 11 and 6A, unlike the piezoelectric motors of the first and second embodiments, the piezoelectric motor 450" according to the comparative example may include a bi-morph type vibrator. For example, in the piezoelectric motor 450" of the comparative example, two piezoelectric elements 452" may be attached to opposite surfaces of the elastic body 453". Unlike the piezoelectric motors of the first and second embodiments, the piezoelectric motor 450" of the comparative example may have a structure in which extending portions (e.g., the extending portions 456 and 456" of the first and second embodiments) are not provided on the elastic body 453".

The graph of FIG. 12A depicts drive frequency and displacement of the piezoelectric motor 450 according to the first embodiment. The graph of FIG. 12B depicts drive frequency and displacement of the piezoelectric motor 450' according to the second embodiment. The graph of FIG. 12C depicts drive frequency and displacement of the piezoelectric motor 450" according to the comparative example. It will be appreciated that the information provided by the graphs of FIGS. 12A, 12B and 12C demonstrates the result(s) of the aforementioned differences between the first embodiment, the second embodiment and the comparative embodiment, such that knowledge of the specific dimensions of each embodiment are not necessary.

Referring to FIGS. 12A, 12B, and 12C, the drive frequencies and displacements according to the first and second embodiments and the comparative example may be represented as shown in Table 1 below.

**[Table 1]**

| | Frequency (kHz) | Displacement (µm) |
|---|---|---|
| First Embodiment | 88.6 | 20.9 |
| Second Embodiment | 76.1 | 34.1 |
| Comparative Example | 105.4 | 25.3 |

In Table 1 above, the displacements mean the distances (e.g., strokes) by which the rods 451 move in the first optical axis direction ① or the second optical axis direction ② based on states before the piezoelectric elements 452 and 452" are deformed. For example, the displacements may be referred to as the first distance d1 of FIG. 7.

When the first embodiment 450 and the second embodiment 450" are compared with each other in Table 1 above, it can be identified that as the extending portions 456' are designed to be larger or heavier within a predetermined range, the drive frequency is lowered and the vibration displacement is increased. Accordingly, by appropriately designing the sizes and/or weights of the extending portions 456 and 456' for a displacement expansion function, a piezoelectric motor having relatively low power consumption and large vibration displacement may be provided.

When the second embodiment 450' and the comparative example 450" are compared with each other in Table 1 above, it can be identified that as the extending portions 456' are included in the uni-morph type vibrator 452 and 453', the uni-morph type vibrator 452 and 453' has a lower drive frequency and a larger vibration displacement than the bi-morph type vibrator 452" and 453". Accordingly, vibration characteristics superior to those of the bi-morph type vibrator may be implemented by using the uni-morph type vibrator having the displacement expansion mechanism. In addition, production costs may be reduced through a reduction in the number of parts and process steps.

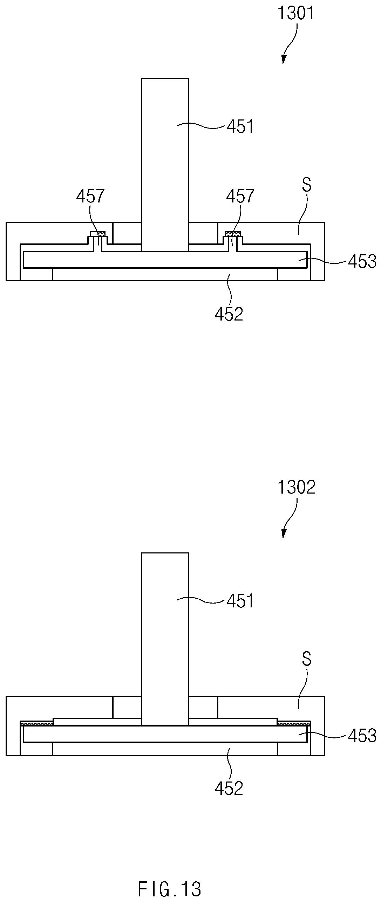

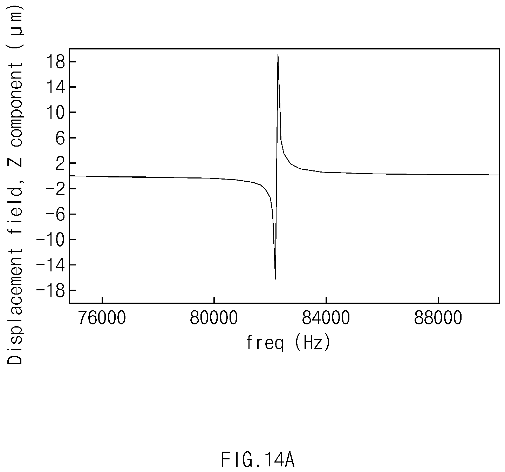

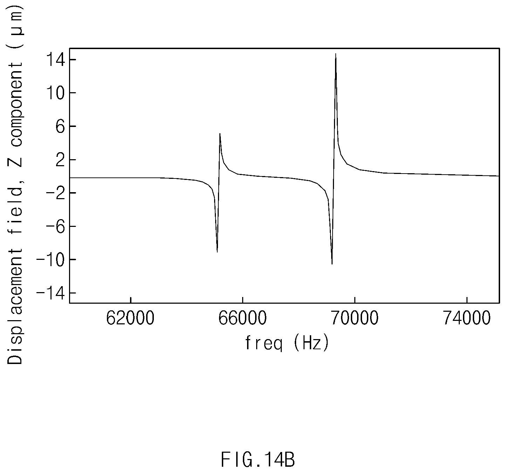

FIG. 13 illustrates various support structures of a piezoelectric motor according to an embodiment. FIG. 14A is a graph depicting driving performance of the piezoelectric motor depending on a first support structure of FIG. 13. FIG. 14B is a graph depicting driving performance of the piezoelectric motor depending on a second support structure of FIG. 13.

In relation to a support structure (or, a constraint condition) of the piezoelectric motor (e.g., the piezoelectric motor 450 of FIG. 10), FIG. 13 illustrates the first support structure 1301 in which nodes (e.g., the nodal positions N of FIG. 9) of a vibrator (e.g., a piezoelectric element 452 and an elastic body 453) are constrained to another structure S and the second support structure 1302 in which opposite end portions of the vibrator 452 and 453 are constrained to the other structure S.

Referring to FIG. 13, the first support structure 1301 may be a structure in which protruding portions 457 of the elastic body 453 are movably bonded to the other structure S. For example, the protruding portions 457 may be formed at positions corresponding to nodal points or a nodal line of the vibrator in which the piezoelectric element 452 and the elastic body 453 are bonded to each other. The first support structure 1301 of FIG. 13 may be substantially the same as the coupling structure of the piezoelectric motor 450 and the second carrier 440 described with reference to FIG. 10. For example, the other structure S may be referred to as the second carrier 440 of FIGS. 5 and 10.

Referring to FIG. 13, the second support structure 1302 may be a structure in which opposite end portions of the elastic body 453 are movably bonded to another structure S. For example, according to the second support structure 1302, the piezoelectric motor 450 may vibrate in a state in which the opposite end portions of the vibrator 452 and 453 are constrained.

A graph of FIG. 14A depicts drive frequency and displacement of the piezoelectric motor 450 depending on the first support structure 1301. A graph of FIG. 14B depicts drive frequency and displacement of the piezoelectric motor 450 depending on the second support structure 1302. It will be appreciated that the information provided by the graphs of FIGS. 14A and 14B demonstrates the result(s) of providing the first support structure 1301 and the second support structure 1302, respectively, such that knowledge of the specific dimensions of the piezoelectric motors 450, first support structure 1301 and second support structure 1302 is not necessary.

Referring to FIGS. 14A and 14B, the drive frequencies and displacements depending on the support structures may be represented as shown in Table 2 below.

**[Table 2]**

| | Frequency (kHz) | Displacement (µm) |
|---|---|---|
| First Support Structure 1301 | 82.20 | 20 |
| Second Support Structure 1302 | 69.20 | 15 |

Referring to Table 2 above, it can be identified that the drive frequency in the case of the first support structure 1301 is higher than the drive frequency in the case of the second support structure 1302 and the vibration displacement in the case of the first support structure 1301 is greater than the vibration displacement in the case of the second support structure 1302. In the case of the second support structure 1302, the opposite end portions having the largest vibration displacement (or, vibration energy) may be constrained to the other structure S. Therefore, relatively large vibration may be transmitted to the other structure S, and the driving speed may be reduced since the degree to which a frequency moves to a low band is large. In contrast, in the case of the first support structure 1301, the protruding portions 457 formed at the positions corresponding to the nodal positions of the vibrator 452 and 453 may be constrained to the other structure S. Thus, vibration transmitted to the other structure S may be minimized or relatively small (e.g., reduced in comparison to the case of the second support structure 1302), and the first support structure 1301 may have an advantage in maintaining the driving speed since the degree to which a frequency moves to a low band is relatively small.

For example, in a case in which the vibrator 452 and 453 illustrated in FIG. 13 freely vibrates without being constrained to the other structure S, the drive frequency may be about 87.70 kHz, and the displacement may be about 30 µm. Based on the drive frequency and the vibration displacement of the free vibration, in the case of the first support structure 1301, the drive frequency may be decreased by about 5.5 kHz, and the vibration displacement may be decreased by about 10 µm, whereas in the case of the second support structure 1302, the drive frequency may be decreased by about 18.5 kHz, and the vibration displacement may be decreased by about 15 µm.

There follows a description of various embodiments and examples of the present disclosure. It will be appreciated that each and every combination of these various embodiments and examples is envisaged and so should be seen as disclosed herein.

A piezoelectric motor 450 according to an embodiment of the disclosure may include a vibrator including an elastic body 453 and a piezoelectric element 452 attached to one surface of the elastic body and a rod 451 that is coupled to the piezoelectric element and that moves depending on vibration displacement of the vibrator. The piezoelectric element may include a first surface 452a to which the rod is coupled and a second surface 452b that faces away from the first surface and that is attached to the elastic body. The rod may extend in a direction substantially perpendicular to the first surface. The vibrator may undergo bending vibration in a lengthwise direction of the rod based on a voltage applied to the piezoelectric element and may be configured such that a nodal position is generated during the bending vibration. The elastic body may include a protruding portion 457 formed at a position corresponding to the nodal position of the vibrator.

In various embodiments, the nodal position may be formed inside the vibrator, and the vibration displacement of the vibrator may be substantially 0 at the nodal position during the bending vibration.

In various embodiments, the elastic body may include a third surface 455a to which the piezoelectric element is attached and a fourth surface 455b that faces away from the third surface, and the protruding portion may protrude from a partial region of the fourth surface in a direction substantially perpendicular to the fourth surface.

In various embodiments, the protruding portion may partially overlap the nodal position in the lengthwise direction of the rod.

In various embodiments, the protruding portion may be formed at a position overlapping the nodal position when the vibrator is viewed from above the first surface of the piezoelectric element.

In various embodiments, the nodal position may include two nodal positions formed at positions symmetrical to each other with respect to the center of the vibrator, and the protruding portion may include a first protruding portion 457a and a second protruding portion 457b formed at positions corresponding to the two nodal positions.

In various embodiments, the elastic body may further include a base portion 455 including a third surface 455a to which the piezoelectric element is attached and a fourth surface 455b that faces away from the third surface and extending portions 456 that extend from opposite ends of the base portion that face in a width direction. The extending portions may be formed to be thicker than the base portion.

In various embodiments, the extending portions may increase weights of opposite end portions of the elastic body that face in a width direction and may expand the vibration displacement of the vibrator during the bending vibration.

In various embodiments, the extending portions may include a first extending portion that forms one end portion of the elastic body and a second extending portion that forms an opposite end portion of the elastic body. The protruding portion may include a first protruding portion 457a spaced apart from the first extending portion toward a central portion of the vibrator by a first length and a second protruding portion 457b spaced apart from the second extending portion toward the central portion of the vibrator by the first length.

In various embodiments, the piezoelectric element may be configured to contract or expand in a width direction of the piezoelectric element based on the voltage applied to the piezoelectric element. A central portion of the vibrator may be bent in a shape convex toward the second surface as the piezoelectric element contracts in the width direction, and the central portion of the vibrator may be bent in a shape convex toward the first surface as the piezoelectric element expands in the width direction.

A camera module 400 according to an embodiment of the disclosure may include a camera housing 410, a first carrier 430 disposed in the camera housing, a lens assembly 420 that is coupled to the first carrier and that includes at least one lens 421, and a piezoelectric motor 450 that provides a driving force to move the first carrier in a direction of an optical axis OA of the lens, at least a portion of the piezoelectric motor being connected to the first carrier. The piezoelectric motor may include a piezoelectric element 452 including a first surface 452a and a second surface 452b that faces away from the first surface, a rod 451 that is coupled to the first surface of the piezoelectric element and that extends in the direction of the optical axis, and an elastic body 453 coupled to the second surface of the piezoelectric element. The piezoelectric element and the elastic body may form a vibrator that undergoes bending vibration in the direction of the optical axis based on a voltage applied to the piezoelectric element. The vibrator may be configured such that a nodal position is generated during the bending vibration, and the elastic body may include a protruding portion 457 formed at a position corresponding to the nodal position of the vibrator.

In various embodiments, the nodal position may be formed inside the vibrator, and vibration displacement of the vibrator may be substantially 0 at the nodal position during the bending vibration.

In various embodiments, the protruding portion may partially overlap the nodal position in the direction of the optical axis.

In various embodiments, the protruding portion may be formed at a position overlapping the nodal position when the vibrator is viewed from above the first surface of the piezoelectric element.

In various embodiments, the elastic body may further include a base portion 455 including a third surface 455a to which the piezoelectric element is attached and a fourth surface 455b that faces away from the third surface and extending portions 456 that extend from opposite ends of the base portion that face in a width direction. The extending portions may be formed to be thicker than the base portion and may be configured to expand vibration displacement of the vibrator during the bending vibration.

In various embodiments, the camera module may further include a second carrier 440 that is disposed in the camera housing so as to be movable in a direction perpendicular to the optical axis and that supports the piezoelectric motor. The first carrier may be connected to the second carrier through the piezoelectric motor so as to be movable in the direction of the optical axis.

In various embodiments, the second carrier may include a seating portion 442 on which the piezoelectric motor is seated, the elastic body may be spaced apart from the seating portion by a specified gap, and the seating portion may include a support recess 443 in which at least part of the protruding portion is accommodated and movably supported.

In various embodiments, a bonding member 445 may be accommodated in the support recess, and the protruding portion may be movably coupled to the bonding member.

In various embodiments, the piezoelectric element may be configured to contract or expand in a width direction of the piezoelectric element based on the voltage applied to the piezoelectric element. The vibrator may generate vibration displacement in the direction of the optical axis by the contraction or expansion of the piezoelectric element. The rod may be configured to move in the direction of the optical axis in response to the vibration displacement of the vibrator.

In various embodiments, the first carrier may include a frame 431 to which the lens assembly is coupled and a connecting member 433 coupled to the frame, the rod being inserted into the connecting member. The connecting member may be configured to move together with the rod or to be separated from a movement of the rod, based on a moving speed of the rod, and the frame may integrally move with the connecting member.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A piezoelectric motor comprising:
a vibrator including an elastic body and a piezoelectric element attached to the elastic body; and
a rod coupled to the vibrator and configured to move based on vibration of the vibrator,
wherein the piezoelectric element includes a first surface and a second surface opposite to the first surface of the piezoelectric element and attached to the elastic body,
wherein the rod extends substantially perpendicular to the piezoelectric element,
wherein the vibrator is configured to generate bending vibration in a lengthwise direction of the rod based on a voltage applied to the piezoelectric element and is configured such that at least one nodal position is defined during the bending vibration, and
wherein the elastic body includes:
a base portion to which the second surface of the piezoelectric element is attached, and
at least one protruding portion protruding from the base portion, and formed at a position corresponding to the at least one nodal position of the vibrator.

2. The piezoelectric motor of claim 1, wherein the at least one nodal position is formed inside the vibrator, and the vibration displacement of the vibrator is substantially 0 at the at least one nodal position during the bending vibration.

3. The piezoelectric motor of any previous claim, wherein the base portion of the elastic body includes a first surface to which the piezoelectric element is attached and a second surface configured to face away from the first surface of the base portion, and
wherein the at least one protruding portion protrudes from a partial region of the second surface of the base portion in a direction substantially perpendicular to the second surface of the base portion.

4. The piezoelectric motor of any previous claim, wherein the at least one protruding portion partially overlaps the corresponding one of the at least one nodal position in the lengthwise direction of the rod.

5. The piezoelectric motor of any previous claim, wherein the at least one protruding portion is formed at a position overlapping the corresponding one of the at least one nodal position when the vibrator is viewed from above the first surface of the piezoelectric element.

6. The piezoelectric motor of any previous claim, wherein, when the voltage is applied to the piezoelectric element, the piezoelectric element is configured to contract and/or expand in a widthwise direction of the piezoelectric element, based on the voltage.

7. The piezoelectric motor of claim 6, wherein a central portion of the vibrator is bent in a shape convex toward the second surface of the piezoelectric element as the piezoelectric element contracts in the widthwise direction, and the central portion of the vibrator is bent in a shape convex toward the first surface of the piezoelectric element as the piezoelectric element expands in the widthwise direction.

8. The piezoelectric motor of claim 6 or claim 7, wherein the elastic body further includes extending portions configured to extend from opposite ends of the base portion and formed to be thicker than the base portion, and
wherein the extending portions are configured to face each other in the widthwise direction and to expand the vibration displacement of the vibrator during the bending vibration based on a weight of the extending portions.

9. The piezoelectric motor of any previous claim, wherein the at least one nodal position includes two nodal positions formed at positions symmetrical to each other with respect to the center of the vibrator, and
wherein the at least one protruding portion includes a first protruding portion and a second protruding portion formed at positions corresponding to the two nodal positions.

10. The piezoelectric motor of claim 8, wherein the extending portions include a first extending portion configured to form one end portion of the elastic body and a second extending portion configured to form an opposite end portion of the elastic body, and
wherein the at least one protruding portion includes a first protruding portion spaced apart from the first extending portion toward a central portion of the vibrator by a first length and a second protruding portion spaced apart from the second extending portion toward the central portion of the vibrator by the first length.

11. A camera module comprising:
a camera housing;
a first carrier disposed in the camera housing;
a lens assembly coupled to the first carrier, the lens assembly including at least one lens; and
a piezoelectric motor according to any of claims 1 to 10, wherein at least a portion of the piezoelectric motor is connected to the first carrier and the piezoelectric motor is configured to provide a driving force to move the first carrier in a direction of an optical axis of the lens.

12. The camera module of claim 11, further comprising:
a second carrier disposed in the camera housing so as to be movable in a direction perpendicular to the optical axis and configured to support the piezoelectric motor,
wherein the first carrier is connected to the second carrier through the piezoelectric motor so as to be movable in the direction of the optical axis.

13. The camera module of claim 12, wherein the second carrier includes a seating portion on which the piezoelectric motor is seated,
wherein the elastic body is spaced apart from the seating portion by a specified gap, and
wherein the seating portion includes at least one support recess, wherein at least part of each one of the at least one protruding portion is accommodated and movably supported in one of the at least one support recess.

14. The camera module of claim 13, wherein a bonding member is accommodated in each one of the at least one support recess, and each one of the at least one protruding portion is movably coupled to the bonding member accommodated in the corresponding one of the at least one support recess.

15. The camera module of any of claims 11 to 14, wherein the first carrier includes a frame to which the lens assembly is coupled and a connecting member coupled to the frame, the rod being inserted into the connecting member,
wherein the connecting member is configured to move together with the rod or to be separated from a movement of the rod, based on a moving speed of the rod, and
wherein the frame integrally moves with the connecting member.
